# EUROPÄISCHE PATENTANMELDUNG

(11) **EP 3 940 041 A1**
(43) Veröffentlichungstag der Anmeldung: **19.01.2022**
(21) Anmeldenummer: 20186443.6
(22) Anmeldetag: 17.07.2020
(51) Int. Cl.: C10G 1/06, B01J 3/00, B01J 19/24, C02F 11/08

(54) **REAKTOR ZUR ÜBERKRITISCHEN HYDROTHERMALEN VERGASUNG VON BIOMASSE**

(71) Anmelder: iGas energy GmbH, 52222 Stolberg (DE)
(72) Erfinder: LENTZ, Karl-Heinz, 52222 Stolberg (DE)
(74) Vertreter: Meinken, Claudia

(57) **Zusammenfassung**

Die Erfindung betrifft einen Reaktor **1** zur überkritischen hydrothermalen Vergasung von wässrigen Vielkomponentengemischen unter Sauerstoffausschluss. Gegenstand der Erfindung ist auch eine Anlage zum Betreiben des Reaktors **1,** ein Verfahren zum Betreiben des Reaktors **1** und die Verwendung des Reaktors **1.** Der erfindungsgemäße Reaktor **1** ist mit vielen vorhandenen Systemen kompatibel, kompakt, kann schlüsselfertig bereitgestellt und kostengünstig hergestellt und betrieben werden. Der erfindungsgemäße Reaktor **1** ermöglicht damit erstmals eine vielfältige kommerzielle Nutzung der hydrothermalen Vergasung von Biomasse, Klärschlamm und anderen organischen Abfällen in überkritischem Wasser.

## Beschreibung

Die Erfindung betrifft einen Reaktor zur überkritischen hydrothermalen Vergasung von wässrigen Vielkomponentengemischen unter Sauerstoffausschluss. Gegenstand der Erfindung ist auch eine Anlage zum Betreiben des Reaktors, ein Verfahren zum Betreiben des Reaktors und die Verwendung des Reaktors. Der erfindungsgemäße Reaktor ist mit vielen vorhandenen Systemen kompatibel, kompakt, kann schlüsselfertig bereitgestellt und kostengünstig hergestellt und betrieben werden. Der erfindungsgemäße Reaktor ermöglicht damit erstmals eine vielfältige kommerzielle Nutzung der hydrothermalen Vergasung von Biomasse, Klärschlamm und anderen organischen Abfällen in überkritischem Wasser.

Durch Wahl der Prozessparameter können aus wässriger Biomasse und wässrigen organischen Abfällen durch überkritische hydrothermale Vergasung verschiedene Produkte erzeugt werden. Im überkritischen Bereich bei Drücken von ≥ 25 MPa und Temperaturen von 600 bis 700 Grad Celsius können aus Biomasse in überkritischem Wasser ohne Zusatz von Katalysatoren und unter Sauerstoffausschluss Wasserstoff und Methan erzeugt werden. Das ist beispielsweise aus WO2019/020209 bekannt.

Reaktoren für die überkritische hydrothermale Vergasung sind in DE20220307U1, DE29719196U1, DE29913370U1, DE10217165A1, DE102005037469A1, DE102006044116B3, DE102008028788A1 offenbart.

Die Prozessbedingungen und Ansprüche an die Reaktoren für die überkritische hydrothermale Vergasung von Biomasse sind aufgrund des hohen Drucks in Kombination mit der hohen Temperatur und den eingesetzten Edukten anspruchsvoll. Reaktoren für die überkritische hydrothermale Vergasung müssen deshalb entweder speziell angepasst sein und / oder regelmäßig erneuert oder gereinigt werden. Die hohe Temperatur bei der überkritischen hydrothermalen Vergasung fördert Korrosionsvorgänge am Reaktor. Der Werkstoff für den Reaktor muss deshalb temperatur-, korrosions- und druckbeständig sein. Hochtemperatur- und korrosionsbeständige Werkstoffe sind bekannt. Diese Werkstoffe sind jedoch im relevanten Temperaturbereich von ≥ 600 Grad Celsius nicht druckbeständig.

DE102018104595A1 offenbart die überkritische hydrothermale Vergasung in einem Reaktor mit einem inneren und einem äußeren Behälter durchzuführen, wobei der innere Behälter temperatur- und korrosionsbeständig ist und der äußere Behälter druckbeständig. DE102018104595A1 offenbart zwischen den Behältern ein auf Vergasungsdruck komprimiertes Gas zu haben, so dass der innere Behälter keiner Druckdifferenz ausgesetzt ist.

Ein weiteres Problem bei der überkritischen hydrothermalen Vergasung von Biomasse ist, dass sich beim Aufheizen die Löslichkeit von enthaltenen Salzen ändert, die in überkritischem Wasser abgeschieden werden oder ausfallen und den Reaktor verstopfen.

WO2019/020209 und DE21201800266 offenbaren Vorrichtungen zur überkritischen hydrothermalen Vergasung von Biomasse unter Sauerstoffausschluss, wobei vor der überkritischen hydrothermalen Vergasung die anorganischen Bestandteile vollständig abgeschieden werden, so dass Feststoffe und Salze den Reaktor bei der anschließenden überkritischen hydrothermalen Vergasung nicht verstopfen können. Die in WO2019/020209 und DE21201800266 beanspruchten Vorrichtungen sind jedoch nicht für eine kompakte Bauweise geeignet.

Diese vielfältigen Anforderungen an einen Reaktor für die hydrothermale Vergasung von Biomasse in überkritischem Wasser haben bisher eine kommerzielle Nutzung verhindert.

Aufgabe der vorliegenden Erfindung ist es, einen Reaktor für die überkritische hydrothermale Vergasung von Biomasse bereitzustellen, der die genannten Nachteile nicht aufweist und deshalb eine breite kommerzielle Nutzung der Technologie der überkritischen hydrothermalen Vergasung von Biomasse und organischen Abfällen ermöglicht.

Diese Aufgabe wird durch den erfindungsgemäßen Reaktor 1 gelöst.

Gegenstand der Erfindung ist ein Reaktor **1** zur überkritischen hydrothermalen Vergasung von auf 25 bis 35 MPa komprimiertem wässrigem Vielkomponentengemisch unter Sauerstoffausschluss umfassend eine druckdicht abschließbare innere Hülle **2**,
in der inneren Hülle **2** einen Abscheidebereich **3** zur Erwärmung von komprimiertem wässrigen Vielkomponentengemisch auf bis zu 550 Grad Celsius und Abtrennung von Wertstoffen aus komprimiertem wässrigen Vielkomponentengemisch,
in der inneren Hülle **2** einen Aufheizbereich **4** zur Erwärmung von komprimiertem wässrigen Vielkomponentengemisch nach der Abtrennung von Wertstoffen auf 600 bis 700 Grad Celsius umfassend vorzugsweise ein oder mehrere Mittel zur Erwärmung,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius.

Der erfindungsgemäße Reaktor **1** ist kostengünstig, kann kompakt gebaut und betriebsbereit an den Einsatzort transportiert werden. Das ermöglicht einen vielfältigen Einsatz des erfindungsgemäßen Reaktors **1** in unterschiedlichsten Entsorgungs-, Wasseraufbereitungs- und Energieversorgungsanlagen.

Der erfindungsgemäße Reaktor **1** ist zur überkritischen hydrothermalen Vergasung von auf 25 bis 35 MPa komprimiertem wässrigem Vielkomponentengemisch unter Sauerstoffausschluss geeignet. Bei bestimmungsgemäßem Betrieb des Reaktors **1** wird wässriges Vielkomponentengemisch, das auf 25 bis 35 MPa komprimiert ist, im Reaktor **1** auf bis zu 700 Grad Celsius erwärmt. Die innere Hülle **2** bildet zwischen Abscheidebereich **3**, Aufheizbereich **4** und Verweilbereich **5**, die im Inneren des Reaktors **1** angeordnet sind und dem Bereich außerhalb der inneren Hülle **2** eine flächige und vollständige bzw. weitgehende Grenze. Die innere Hülle **2** des erfindungsgemäßen Reaktors **1** bildet einen Druckraum (erster Druckraum **15**). Der erste Druckraum **15** ist druckdicht abschließbar. Dadurch wird die Aufrechterhaltung des Drucks von 25 bis 35 MPa im Abscheidebereich **3**, Aufheizbereich **4** und Verweilbereich **5** während der überkritischen hydrothermalen Vergasung von komprimiertem wässrigem Vielkomponentengemisch gewährleistet. Um den Druck im Inneren der inneren Hülle **2** aufrechtzuerhalten ist die innere Hülle **2** druckdicht abschließbar. Die innere Hülle **2** umschließt den ersten Druckraum **15** im Inneren der inneren Hülle **2**. Der erste Druckraum **15** im Inneren des Reaktors **1** umfasst Abscheidebereich **3**, Aufheizbereich **4** und Verweilbereich **5**.

Druckdicht abschließbar bedeutet, dass die innere Hülle **2** Öffnungen umfassen kann oder geöffnet werden kann. Beispielsweise kann die druckdicht abschließbare innere Hülle **2** Öffnungen umfassen, beispielsweise Öffnungen für Leitungen **14**, wobei die Öffnungen und die Leitungen **14** druckdicht abschließbar miteinander verbunden sind. Die Öffnungen in der inneren Hülle **2** und / oder die Leitungen **14** sind beispielsweise über Ventile druckdicht abschließbar. In speziellen Ausführungsformen ist die druckdicht abschließbare innere Hülle **2** eine druckdicht abgeschlossene innere Hülle **2**.

In besonders bevorzugten Ausführungsformen umfasst der erfindungsgemäße Reaktor **1** eine äußere Hülle **6**, die die innere Hülle **2** umgibt. In bevorzugten Ausführungsformen des Reaktors **1** mit innerer Hülle **2** und äußerer Hülle **6** bildet die äußere Hülle **6** einen zweiten Druckraum **16**, indem die äußere Hülle **6** eine flächige und vollständige bzw. weitgehende Grenze zwischen der inneren Hülle **2** und dem Äußeren bildet. In besonders bevorzugten Ausführungsformen des Reaktors **1** ist die äußere Hülle **6** eine druckdicht abschließbare äußere Hülle **6**.

Gegenstand der Erfindung ist ein Reaktor **1** zur überkritischen hydrothermalen Vergasung von auf 25 bis 35 MPa komprimiertem wässrigem Vielkomponentengemisch unter Sauerstoffausschluss umfassend eine druckdicht abschließbare innere Hülle **2**,
in der inneren Hülle **2** einen Abscheidebereich **3** zur Erwärmung von komprimiertem wässrigen Vielkomponentengemisch auf bis zu 550 Grad Celsius und Abtrennung von Wertstoffen aus komprimiertem wässrigen Vielkomponentengemisch,
in der inneren Hülle **2** einen Aufheizbereich **4** zur Erwärmung von komprimiertem wässrigen Vielkomponentengemisch nach der Abtrennung von Wertstoffen auf 600 bis 700 Grad Celsius umfassend vorzugsweise ein oder mehrere Mittel zur Erwärmung,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
eine äußere Hülle **6**, die die innere Hülle **2** umgibt und zwischen innerer Hülle **2** und äußerer Hülle **6** einen zweiten Druckraum **16**.

In alternativen Ausführungsformen umfasst der erfindungsgemäße Reaktor **1** eine innere Hülle **2**, aber keine äußere Hülle **6**. In Fällen, in denen der Reaktor **1** keine äußere Hülle **6** umfasst, ist die innere Hülle **2** an die Druckdifferenz zwischen dem Inneren des Reaktors **1** und dem Äußeren angepasst.

In besonders bevorzugten Ausführungsformen umfasst der erfindungsgemäße Reaktor **1** eine druckdicht abschließbare innere Hülle **2**,
in der inneren Hülle **2** einen Abscheidebereich **3** mit einem oder mehreren Mittel zur Erwärmung von komprimiertem wässrigen Vielkomponentengemisch auf bis zu 550 Grad Celsius und einen oder mehrere Mittel zur Abtrennung von Wertstoffen aus dem komprimierten wässrigen Vielkomponentengemisch,
in der inneren Hülle **2** einen Aufheizbereich vorzugsweise mit einem oder mehreren Mitteln zur Erwärmung von komprimiertem wässrigen Vielkomponentengemisch nach der Abtrennung von Wertstoffen auf 600 bis 700 Grad Celsius,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
wobei Abscheidebereich **2**, Aufheizbereich **4** und Verweilbereich **5** als Kolonne angeordnet sind. Der Reaktor **1** kann eine druckdicht abschließbare äußere Hülle **6**, die die innere Hülle **2** umgibt und zwischen innerer Hülle **2** und äußerer Hülle **6** einen zweiten Druckraum **16** umfassen.

Die Anordnung von Einbauten wie Mittel zur Erwärmung und Mittel zur Abtrennung in Form einer hohlen, schlanken Säule wird als Kolonne bezeichnet. In besonders bevorzugten Ausführungsformen des erfindungsgemäßen Reaktors **1** sind Abscheidebereich **3**, Aufheizbereich **4** und Verweilbereich **5** in der inneren Hülle **2** in einer Kolonne angeordnet. Die Kolonne ist ein verfahrenstechnischer Apparat zur Trennung durch die physikalischen Eigenschaften und Gleichgewichtszustände zwischen unterschiedlichen Phasen. In besonders bevorzugten Ausführungsformen des erfindungsgemäßen Reaktors **1** umfasst die innere Hülle **2** die Kolonnenwand. In anderen besonders bevorzugten Ausführungsformen des erfindungsgemäßen Reaktors **1** ist die innere Hülle **2** die Kolonnenwand. In der Kolonne durchströmt das auf 25 bis 35 MPa komprimierte wässrige Vielkomponentengemisch zunächst den Abscheidebereich **3**, dann den Aufheizbereich **4** und dann den Verweilbereich 5 des erfindungsgemäßen Reaktors **1**. In der Kolonne grenzt der Aufheizbereich **4** an den Abscheidebereich **3**, der Aufheizbereich **4** grenzt an den Verweilbereich **5**.

Mittel zur Erwärmung von komprimiertem wässrigem Vielkomponentengemisch sind vorzugsweise Heizelemente wie Wärmetauscher oder elektrische Heizungen, Mittel zur Abscheidung von Wertstoffen vorzugsweise Sammler bzw. Abscheider. Zur Abtrennung von Wertstoffen aus dem komprimierten wässrigen Vielkomponentengemisch im Abscheidebereich **3** umfasst die Kolonne Einbauten wie Wärmetauscher und Sammler und / oder Abscheider. Im Abscheidebereich **3** kann die Kolonne zur weiteren Erwärmung von komprimiertem wässrigem Vielkomponentengemisch weitere Heizelemente umfassen. Im Abscheidebereich **3**, Aufheizbereich **4** und Verweilbereich **5** kann die Kolonne weitere Einbauten umfassen. Eine besonders bevorzugte Ausführungsform des erfindungsgemäßen Reaktors **1** ist die Anordnung der einzelnen Einbauten als Kolonne. In besonders bevorzugten Ausführungsformen steht die Kolonne (der Reaktor **1**) aufrecht.

In bevorzugten Ausführungsformen umfasst der erfindungsgemäße Reaktor **1** eine druckdicht abschließbare innere Hülle **2**,
in der inneren Hülle **2** einen Abscheidebereich **3** mit einem oder mehreren Wärmetauschern zur Erwärmung von komprimiertem wässrigen Vielkomponentengemisch auf bis zu 550 Grad Celsius und einen oder mehrere Sammler oder Abscheider zur Abtrennung von Wertstoffen aus dem komprimierten wässrigen Vielkomponentengemisch,
in der inneren Hülle **2** einen Aufheizbereich **4** mit einem oder mehreren Heizelementen zur Erwärmung von komprimiertem wässrigen Vielkomponentengemisch nach der Abtrennung von Wertstoffen auf 600 bis 700 Grad Celsius,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
wobei Abscheidebereich **3**, Aufheizbereich **4** und Verweilbereich **5** als Kolonne angeordnet sind. Der Reaktor **1** kann eine äußere Hülle **6**, die die innere Hülle **2** umgibt und zwischen innerer Hülle **2** und äußerer Hülle **6** einen zweiten Druckraum **16** umfassen. Eine besonders bevorzugte Ausführungsform steht die Kolonne aufrecht.

Der erfindungsgemäße Reaktor **1** kann diverse Kombinationen von Einbauten und Detailgestaltungen der Form umfassen. Die verschiedenen Ausführungsformen im Detail ermöglichen eine Anpassung an unterschiedliche Prozessanforderungen, unterschiedliche wässrige Vielkomponentengemische, unterschiedliche Anwendungen. Für die diversen Ausgestaltungen des erfindungsgemäßen Reaktors **1** werden nachfolgend Beispiele angegeben. Die Erfindung ist jedoch nicht auf die offenbarten Ausführungsformen beschränkt.

In besonders bevorzugten Ausführungsformen des erfindungsgemäßen Reaktors **1** sind die ein oder mehreren Heizelemente und die ein oder mehreren Abscheider im Abscheidebereich **3**, das eine Heizelement oder die mehreren Heizelemente im Aufheizbereich **4** als Einbauten in einer Kolonne angeordnet. Im Reaktor **1** ist der Abscheidebereich **3** mit dem Aufheizbereich **4** verbunden und der Aufheizbereich **4** mit dem Verweilbereich **5** verbunden. Durch diese Anordnung im Reaktor **1** strömt das komprimierte wässrige Vielkomponentengemisch zunächst durch die Heizelemente und Abscheider im Abscheidebereich **3**, wobei Wertstoffe abgetrennt werden, dann durch den Aufheizbereich **4** wobei das komprimierte wässrige Vielkomponentengemisch auf die Vergasungstemperatur von 600 bis 700 Grad Celsius erwärmt wird, und wobei der Aufheizbereich **4** in den Verweilbereich **5** übergeht, den das wässrige Vielkomponentengemisch durchströmt und dabei zu Synthesegas und Wasser umgesetzt wird. Die überkritische hydrothermale Vergasung von auf 25 bis 35 MPa komprimiertem wässrigen Vielkomponentengemisch findet im Reaktor **1** bei Temperaturen von 600 bis 700 Grad Celsius (= Vergasungstemperatur) statt, d.h. beim Übergang vom Aufheizbereich **4** in den Verweilbereich **5** und im Verweilbereich **5**.

Der Reaktor **1** umfasst Heizelemente und Abscheider zur Abtrennung von Wertstoffen aus komprimiertem wässrigen Vielkomponentengemisch, die im Reaktor **1** so angeordnet sind, dass aus komprimiertem wässrigem Vielkomponentengemisch die Wertstoffe vor der überkritischen hydrothermalen Vergasung abgetrennt werden. Dabei werden die Wertstoffe abgetrennt, die bei Erhöhung der Temperatur auf bis zu 550 Grad Celsius aus dem komprimierten wässrigen Vielkomponentengemisch ausfallen. Durch Abtrennung von Wertstoffen wie Sand, Salzen und Nährstoffen aus dem komprimierten wässrigen Vielkomponentengemisch vor der Erwärmung auf > 550 Grad Celsius bzw. durch Abtrennung von Wertstoffen wie Sand, Salzen und Nährstoffen im Abscheidebereich **3** des Reaktors **1** vor der Erwärmung auf die Vergasungstemperatur von 600 bis 700 Grad Celsius sind die in wässrigen Vielkomponentengemischen enthaltenen Stoffe, die den Reaktor **1** im Aufheizbereich **4** und / oder im Verweilbereich **5** verstopfen könnten und die maßgeblich zur Korrosion bei hohen Temperaturen beitragen, weitgehend abgetrennt. Nach Abtrennung der Wertstoffe umfasst das wässrige Vielkomponentengemisch im Wesentlichen nur noch organische Verbindungen und Bestandteile. Dadurch wird die Verstopfung des Reaktors **1** vermieden und die Korrosion des Reaktors **1** vermindert.

Durch die Anordnung von Abscheidebereich **3**, Aufheizbereich **4** und Verweilbereich 5 des erfindungsgemäßen Reaktors **1** als Kolonne ist zudem eine kompakte Bauweise des Reaktors **1** möglich. Der erfindungsgemäße Reaktor **1** hat beispielsweise eine Höhe bzw. Länge von 30 m, beispielsweise 25 m, vorzugsweise 20 m oder 17 m, oder weniger, beispielsweise 10 m, oder 5 m. Der Reaktor **1** hat beispielsweise einen Durchmesser von 3 m oder weniger, beispielsweise 0,5 bis 2,5 m, vorzugsweise 1 bis 2 m, beispielsweise 1,5 m, 1,6 m, 1,7 m, 1,8 m, 1,9 m. In bevorzugten Ausführungsformen hat der Reaktor **1** hat einen Durchmesser von 1,2 m bis 2,5 m, vorzugsweise 1,8 m.

In bevorzugten Ausführungsformen umfasst der erfindungsgemäße Reaktor **1** eine druckdicht abschließbare innere Hülle **2**,
in der inneren Hülle **2** einen Abscheidebereich **3** mit einem oder mehreren Wärmetauschern zur Erwärmung von komprimiertem wässrigen Vielkomponentengemisch auf bis zu 550 Grad Celsius und einen oder mehrere Sammler oder Abscheider zur Abtrennung von Wertstoffen aus dem komprimierten wässrigen Vielkomponentengemisch,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend vorzugsweise ein oder mehrere Heizelemente,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
wobei Abscheidebereich **3**, Aufheizbereich **4** und Verweilbereich **5** als Kolonne angeordnet sind,
wobei der Reaktor **1** eine Höhe von 30 m oder weniger und einen Durchmesser von 2,5 m oder weniger hat. In besonderen Ausführungsformen hat der Reaktor **1** eine Höhe von 15 bis 20 m und einen Durchmesser von 1 m bis 2 m. In besonderen Ausführungsformen hat der Reaktor **1** eine Länge von 17 m und einen Durchmesser von 1,8 m. Der Reaktor **1** kann eine äußere Hülle **6**, die die innere Hülle **2** umgibt und zwischen innerer Hülle **2** und äußerer Hülle **6** einen zweiten Druckraum **16** umfassen.

In einer bevorzugten Ausführungsform des Reaktors **1** wird im Abscheidebereich **3** aus dem auf 25 bis 35 MPa komprimierten Vielstoffgemisch eine Wertstofffraktion WF1 bei 400 bis 500 Grad Celsius abgeschieden. In einer weiteren Ausführungsform des Reaktors **1** wird im Abscheidebereich **3** aus dem auf 25 bis 35 MPa komprimierten wässrigen Vielkomponentengemisch eine Wertstofffraktion WF1 bei 300 bis 550 Grad Celsius abgeschieden. In einer weiteren Ausführungsform des Reaktors **1** wird im Abscheidebereich **3** aus dem auf 25 bis 35 MPa komprimierten wässrigen Vielkomponentengemisch eine Wertstofffraktion WF1 bei 300 bis 400 Grad Celsius abgeschieden. In einer weiteren Ausführungsform des Reaktors **1** wird im Abscheidebereich **3** aus dem auf 25 bis 35 MPa komprimierten wässrigen Vielkomponentengemisch eine Wertstofffraktion WF1 bei 200 bis 400 Grad Celsius abgeschieden. Der erfindungsgemäße Reaktor **1** umfasst zu diesem Zweck in der inneren Hülle **2** einen Abscheidebereich **3** umfassend Wärmetauscher WT1 **9** zur Erwärmung von komprimiertem wässrigem Vielkomponentengemisch auf eine Temperatur ausgewählt aus 400 bis 550 Grad Celsius, 300 bis 550 Grad Celsius, 300 bis 400 Grad Celsius, 200 bis 400 Grad Celsius und Abscheider A1 zur Abtrennung einer Wertstofffraktion WF1 aus dem komprimierten wässrigen Vielkomponentengemisch. Beim Erwärmen des auf 25 bis 35 MPa komprimierten wässrigen Vielkomponentengemisches auf mindestens 200 Grad Celsius, beispielsweise 300, vorzugsweise 400 bis 550 Grad Celsius werden Wertstoffe wie feste Stoffe, Metallsalze, Nährstoffe in mindestens einer Wertstofffraktion WF1 aus dem komprimierten wässrigen Vielkomponentengemisch abgeschieden.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT1 **9** und Abscheider A1 zur Erwärmung von komprimiertem wässrigen Vielkomponentengemisch auf 200 bis 550 Grad Celsius, vorzugsweise auf 400 bis 550 Grad Celsius und zur Abtrennung einer Wertstofffraktion WF1 aus dem komprimierten wässrigen Vielkomponentengemisch,
in der inneren Hülle **2** einen Aufheizbereich **4** zur Erwärmung des komprimierten wässrigen Vielkomponentengemisches nach Abtrennung der Wertstofffraktion WF1 auf 600 bis 700 Grad Celsius umfassend vorzugsweise ein oder mehrere Heizelemente,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** vorzugsweise als Kolonne angeordnet sind. Der Reaktor **1** kann eine äußere Hülle **6**, die die innere Hülle **2** umgibt und zwischen innerer Hülle **2** und äußerer Hülle **6** einen zweiten Druckraum **16** umfassen.

In weiteren bevorzugten Ausführungsform des erfindungsgemäßen Reaktors **1** werden die Wertstoffe in mehr als einer Wertstofffraktion, beispielsweise in zwei oder drei oder mehr Wertstofffraktionen abgeschieden. Ob eine oder mehrere Wertstofffraktionen abgeschieden werden, hängt beispielsweise vom verwendeten wässrigen Vielkomponentengemisch also der Zusammensetzung des wässrigen Vielkomponentengemisches und / oder der weiteren Verwendung der abgetrennten Wertstoffe ab. Der erfindungsgemäße Reaktor **1** kann von einem Fachmann entsprechend angepasst werden. In bevorzugten Ausführungsform des erfindungsgemäßen Reaktors **1** wird zu diesem Zweck die Temperatur im Abscheidebereich **3** durch ein oder mehrere Heizelemente wie Wärmetauscher, die das komprimierte, wässrige Vielkomponentengemisch durchströmt, in ein oder mehreren Schritten erwärmt und Wertstoffe in ein oder mehreren Fraktionen abgeschieden. Der erfindungsgemäße Reaktor **1** umfasst zu diesem Zweck ein oder mehrere Heizelemente wie Wärmetauscher und Abscheidung und / oder Sammler von Wertstofffraktionen.

In besonders bevorzugten Ausführungsformen umfasst der Reaktor **1** im Abscheidebereich **3** mehrere Heizelemente wie Wärmetauscher und mehrere Sammler und / oder Abscheider zur Abtrennung von mehreren Wertstofffraktionen aus dem auf 25 bis 35 MPa komprimierten Vielkomponentengemisch.

In besonders bevorzugten Ausführungsformen umfasst der Reaktor **1** im Abscheidebereich **3** zwei Mittel zur Erwärmung und zwei Mittel zur Abscheidung von zwei Wertstofffraktionen aus dem auf 25 bis 35 MPa komprimierten wässrigen Vielkomponentengemisch. In einer Ausführungsformen umfasst der erfindungsgemäße Reaktor **1** in der inneren Hülle **2** einen Abscheidebereich **3** umfassend Wärmetauscher WT1 **9** und Abscheider A1 zur Erwärmung von komprimiertem wässrigem Vielkomponentengemisch auf eine Temperatur von bis zu 550 Grad Celsius, vorzugsweise von 400 bis 550 Grad Celsius und zur Abtrennung einer Wertstofffraktion WF1 aus dem komprimierten wässrigen Vielkomponentengemisch, im Abscheidebereich **3** Wärmetauscher WT2 und Abscheider A2 zur Erwärmung des komprimierten wässrigen Vielkomponentengemisches auf eine Temperatur von bis zu 400 Grad Celsius, vorzugsweise von 200 bis 400 Grad Celsius oder 300 bis 400 Grad Celsius und Abtrennung einer Wertstofffraktion WF2 aus dem komprimierten wässrigen Vielkomponentengemisch. Die Wärmetauscher WT1 **9** und WT2 **12**, sind dabei so angeordnet, dass komprimiertes wässriges Vielkomponentengemisch zuerst durch den Wärmetauscher WT2 **12** strömt zur Erwärmung auf bis zu 400 Grad Celsius und danach durch den Wärmetauscher WT1 **9** strömt zur Erwärmung auf bis zu 550 Grad Celsius. In besonders bevorzugten Ausführungsformen des Reaktors **1** sind die Wärmetauscher WT1 **9** und WT2 **12** in einer Kolonne dabei so angeordnet, dass komprimiertes wässriges Vielkomponentengemisch zuerst durch den Wärmetauscher WT2 **12** strömt zur Erwärmung auf bis zu 400 Grad Celsius, wobei die Wertstofffraktion WF2 abgeschieden wird und danach durch den Wärmetauscher WT1 **9** strömt zur Erwärmung auf bis zu 550 Grad Celsius, wobei die Wertstofffraktion WT1 abgeschieden wird. Weitere alternative Erwärmung und Abtrennung sind dem Fachmann bekannt.

In besonders bevorzugten Ausführungsformen umfasst der Reaktor **1** im Abscheidebereich **3** drei Mittel zur Erwärmung und drei Mittel zur Abscheidung von drei Wertstofffraktionen aus dem auf 25 bis 35 MPa komprimierten wässrigen Vielkomponentengemisch. In besonders bevorzugten Ausführungsformen umfasst der erfindungsgemäße Reaktor **1** in der inneren Hülle **2** einen Abscheidebereich **3** umfassend Wärmetauscher WT1 **9** und Abscheider A1 zur Erwärmung von komprimiertem wässrigem Vielkomponentengemisch auf eine Temperatur von bis zu 550 Grad Celsius, vorzugsweise von 400 bis 550 Grad Celsius und zur Abtrennung einer Wertstofffraktion WF1 aus dem komprimierten wässrigen Vielkomponentengemisch, im Abscheidebereich **3** Wärmetauscher WT2 **12** und Abscheider A2 zur Erwärmung des komprimierten wässrigen Vielkomponentengemisches auf eine Temperatur von bis zu 400 Grad Celsius, vorzugsweise von 300 bis 400 Grad Celsius und Abtrennung einer Wertstofffraktion WF2 aus dem komprimierten wässrigen Vielkomponentengemisch, im Abscheidebereich **3** Wärmetauscher WT3 **13** und Abscheider A3 zur Erwärmung des komprimierten wässrigen Vielkomponentengemisches auf eine Temperatur von bis zu 300 Grad Celsius, vorzugsweise von 200 bis 300 Grad Celsius und Abtrennung einer Wertstofffraktion WF3 aus dem komprimierten wässrigen Vielkomponentengemisch. In dem Reaktor **1** sind die Wärmetauscher WT1 **9**, WT2 **12**, WT3 **13** vorzugsweise in einer Kolonne so angeordnet, dass komprimiertes wässriges Vielkomponentengemisch zuerst durch den Wärmetauscher WT3 **13** strömt zur Erwärmung auf bis zu 300 Grad Celsius, wobei die Wertstofffraktion WF3 abgeschieden wird, danach durch den Wärmetauscher WT2 **12** strömt zur Erwärmung auf bis zu 400 Grad Celsius, wobei die Wertstofffraktion WF2 abgeschieden wird, danach durch den Wärmetauscher WT1 **9** strömt zur Erwärmung auf bis zu 550 Grad Celsius, wobei die Wertstofffraktion WF1 abgeschieden wird. Weitere alternative Möglichkeiten zur graduellen Erwärmung von komprimiertem wässrigen Vielkomponentengemisch und zur Abtrennung von Wertstofffraktionen kann der Fachmann in einem entsprechend angepassten erfindungsgemäßen Reaktor **1** umsetzen.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT2 **12** und Abscheider A2 zur Erwärmung von komprimiertem wässrigen Vielkomponentengemisch auf bis zu 400 Grad Celsius, vorzugsweise 300 bis 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf 400 bis 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches auf 600 bis 700 Grad Celsius nach Abtrennung von Wertstofffraktion WF2, Wertstofffraktion WF1 umfassend vorzugsweise ein oder mehrere Heizelemente,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind. Der Reaktor **1** kann eine äußere Hülle **6**, die die innere Hülle **2** umgibt und zwischen innerer Hülle **2** und äußerer Hülle **6** einen zweiten Druckraum **16** umfassen.

In bevorzugten Ausführungsformen umfasst der erfindungsgemäße Reaktor **1** eine druckdicht abschließbare innere Hülle **2**, in der inneren Hülle **2** einen Abscheidebereich **3** umfassend Wärmetauscher WT3 **13** und Abscheider A3 zur Erwärmung von komprimiertem wässrigen Vielkomponentengemisch auf bis zu 300 Grad Celsius, vorzugsweise 200 bis 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf bis zu 400 Grad Celsius, vorzugsweise 300 bis 400 Grad Celsius und zur Abtrennung einer Wertstofffraktion WF2,

Wärmetauscher WT1 **9** und Abscheider A1 zur Erwärmung von komprimiertem wässrigen Vielkomponentengemisch auf bis zu 550 Grad Celsius, vorzugsweise 400 bis 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches auf 600 bis 700 Grad Celsius nach Abtrennung von Wertstofffraktion WF3, Wertstofffraktion WF2, Wertstofffraktion WF1 umfassend vorzugsweise ein oder mehrere Heizelemente,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind. Der Reaktor 1 kann eine äußere Hülle **6**, die die innere Hülle **2** umgibt und zwischen innerer Hülle **2** und äußerer Hülle **6** einen zweiten Druckraum **16** umfassen.

Nach Abtrennung der Wertstoffe besteht das wässrige Vielkomponentengemisch überwiegend bzw. nur noch aus organischen Verbindungen bzw. organischen Bestandteilen und Wasser. Nach Abtrennung der Wertstoffe wird das komprimierte wässrige Vielkomponentengemisch im Aufheizbereich **4** bis zur Vergasungstemperatur von 600 bis 700 Grad Celsius erwärmt. Nach Abtrennung der Wertstoffe durchströmt das komprimierte wässrige Vielkomponentengemisch zunächst den Aufheizbereich **4** und danach den Verweilbereich **5**, wobei das komprimierte wässrige Vielkomponentengemisch zu Synthesegas vergast wird, das unter den Bedingungen von Druck und Temperatur, die im Verweilbereich **5** bei bestimmungsgemäßem Betrieb des Reaktors **1** vorliegen, in überkritischem Wasser gelöst ist.

Der erfindungsgemäße Reaktor **1** weist in der inneren Hülle **2** einen Aufheizbereich **4** auf, den das komprimierte wässrige Vielkomponentengemisch nach Abtrennung der Wertstofffraktion(en) durchströmt. Im Aufheizbereich **4** wird das komprimierte wässrige Vielkomponentengemisch auf mindestens 600 Grad Celsius, beispielsweise 610 oder 620 Grad Celsius, vorzugsweise 630 oder 640 Grad Celsius, besonders bevorzugt 650 oder 660 Grad Celsius erwärmt. Im Aufheizbereich **4** wird das komprimierte wässrige Vielkomponentengemisch auf maximal 700 Grad Celsius, beispielsweise 695 oder 690 Grad Celsius, vorzugsweise 685 oder 680 Grad Celsius, besonders bevorzugt 675 oder 670 Grad Celsius erwärmt. Die Temperatur kann der Fachmann beispielsweise nach Zusammensetzung des eingesetzten wässrigen Vielkomponentengemisches und / oder gewünschter Zusammensetzung des bei der überkritischen hydrothermalen Vergasung erzeugten Synthesegases variieren. In bevorzugten Ausführungsformen umfasst der erfindungsgemäße Reaktor **1** zu diesem Zweck ein oder mehrere Heizelemente im Aufheizbereich **4**. Die Erwärmung im Aufheizbereich **4** kann durch Heizelemente, die im Inneren der inneren Hülle **2** im Aufheizbereich **4** angeordnet sind und / oder durch Heizelemente, die außerhalb der inneren Hülle **2** in der Nähe des Aufheizbereichs **4** angeordnet sind, erfolgen.

In einer bevorzugten Ausführungsform umfasst der erfindungsgemäße Reaktor **1** in der inneren Hülle **2** im Aufheizbereich **4** einen Wärmetauscher WT4 **10** als Heizelement. Der erfindungsgemäße Reaktor **1** kann im Aufheizbereich **4** weitere Wärmetauscher umfassen.

Die Erwärmung von komprimiertem wässrigen Vielkomponentengemisch im Abscheidebereich **3** und zumindest teilweise im Aufheizbereich **4** erfolgt in bevorzugten Ausführungsformen mit Wärmetauschern, wobei die Wärme des überkritischen Wassers, in dem Synthesegas gelöst ist, verwendet wird, um komprimiertes wässriges Vielkomponentengemisch zu erwärmen. Dazu wird in dem erfindungsgemäßen Reaktor **1** das überkritische Wasser, in dem Synthesegas gelöst ist, aus dem Verweilbereich **5** geleitet und durch die Wärmetauscher geleitet. In bevorzugten Ausführungsformen des Reaktors **1** erfolgt dies durch ein oder mehrere Synthesegasleitungen **11**, die im Inneren des Reaktors **1** angeordnet ist / sind und mit den Wärmetauschern verbunden ist / sind. Dadurch wird komprimiertes wässriges Vielkomponentengemisch erwärmt und gleichzeitig überkritisches Wasser, in dem Synthesegas gelöst ist, abgekühlt. Die Führung von überkritischem Wasser in dem Synthesegas gelöst ist, im Inneren des Reaktors **1** und die Nutzung der in dem überkritischen Wasser enthaltenen Wärme zur Erwärmung von neuem Edukt, macht den erfindungsgemäßen Reaktor **1** energetisch besonders effizient. Durch die Synthesegasleitung(en) **11** und die Wärmetauscher wird die Durchmischung von komprimiertem wässrigem Vielkomponentengemisch (Edukt) mit überkritischem Wasser, in dem Synthesegas gelöst ist (Produkt), vermieden werden.

In bevorzugten Ausführungsformen umfasst der Reaktor **1** Mittel zur Regulierung der Wärmemenge, die die Heizelemente, vorzugsweise Wärmetauscher, beispielsweise Wärmetauscher WT4 **10** im Aufheizbereich **4** auf das komprimierte wässrige Vielkomponentengemisch übertragen. In bevorzugten Ausführungsformen umfasst der Reaktor **1** Mittel zur Regulierung der Wärmemenge, die die Heizelemente, vorzugsweise Wärmetauscher im Abscheidebereich **3** auf das komprimierte wässrige Vielkomponentengemisch übertragen. In bevorzugten Ausführungsformen umfasst der Reaktor **1** Mittel zur Regulierung der Menge an überkritischem Wasser, in dem Synthesegas gelöst ist, das durch einzelne Wärmetauscher im Aufheizbereich **4** und / oder im Abscheidebereich **3** geleitet wird.

Ein bevorzugtes Mittel zur Regulierung der Menge an überkritischem Wasser in dem Synthesegas gelöst ist, die durch den Wärmetauscher WT4 **10** geleitet wird oder den Wärmetauscher WT4 **10** umgeht, ist ein Bypass-Ventil. In einer besonders bevorzugten Ausführungsform umfasst der erfindungsgemäße Reaktor **1** in der inneren Hülle **2** im Aufheizbereich **4** einen Wärmetauscher WT4 **10** und ein Bypass-Ventil, zur Regulierung der Menge an überkritischem Wassers, das von dem Verweilbereich **5** kommend durch den Aufheizbereich **4** in Richtung Abscheidebereich **3** strömt. In einer besonders bevorzugten Ausführungsform umfasst der erfindungsgemäße Reaktor **1** in der inneren Hülle **2** im Aufheizbereich **4** einen Wärmetauscher WT4 **10** und einen Bypass, der den Wärmetauscher WT4 **10** umgeht und ein Bypass-Ventil zur Regulierung der Menge an überkritischem Wasser, in dem Synthesegas gelöst ist. Das Bypass-Ventil ist vorzugsweise Bestandteil des Wärmetauschers WT4 **10**. In einer besonders bevorzugten Ausführungsform umfasst der erfindungsgemäße Reaktor **1** in der inneren Hülle **2** im Aufheizbereich **4** einen Wärmetauscher WT4 **10**, wobei der Wärmetauscher WT4 **10** ein Bypass-Ventil zur Regulierung der Temperatur in Wärmetauscher WT1 **9** umfasst. Mit dem Bypass-Ventil kann die Menge an überkritischem Wasser reguliert werden, die den Wärmetauscher WT4 **10** umgeht und direkt in den Wärmetauscher WT1 **9** geleitet wird. Die Erwärmung des komprimierten wässrigen Vielkomponentengemisches auf bis zu 550 Grad Celsius im Wärmetauscher WT1 **9** ist besonders kritisch. Durch den Bypass und das Bypass-Ventil kann der übertragbare Wärmestrom erhöht werden, der auf komprimiertes wässriges Vielkomponentengemisch im Wärmetauscher WT1 **9** übertragen wird, weil bei entsprechender Einstellung des Bypass-Ventils, keine oder weniger Wärme von überkritischem Wasser, in dem Synthesegas gelöst ist, auf komprimiertes wässriges Vielkomponentengemisch im Wärmetauscher WT4 **10** übertragen wird. Durch die größere Temperaturdifferenz zwischen überkritischem Wasser, in dem Synthesegas gelöst ist, und komprimiertem wässrigem Vielkomponentengemisch im Wärmetauscher WT1 **9**, wird der übertragbare Wärmestrom im Wärmetauscher WT1 **9** erhöht, wenn mehr überkritisches Wasser, in dem Synthesegas gelöst ist, durch den Bypass vom Aufheizbereich **4** in den Wärmetauscher WT1 **9** im Abscheidebereich **3** strömt als wenn das überkritische Wasser zunächst durch den Wärmetauscher WT4 **10** und erst danach durch den Wärmetauscher WT1 **9** strömt.

Ein Wärmetauscher WT4 **10** mit Bypass-Ventil beispielsweise leitet das überkritische Wasser, in dem Synthesegas gelöst ist, vollständig durch den Wärmetausche WT4 **10** und dann durch den Wärmetauscher WT1 **9** zur Erwärmung von komprimiertem wässrigem Vielkomponentengemisch. Bei einer andern Einstellung des Bypass-Ventils wird nur ein Teil des überkritischen Wassers, in dem Synthesegas gelöst ist, durch den Wärmetauscher WT4 **10** geleitet, während der andere Teil des überkritischen Wassers, in dem Synthesegas gelöst ist, in den Bypass und von dort in den Wärmetauscher WT1 **9** geleitet wird. Der Bypass kann beispielsweise zwischen Wärmetauscher WT4 **10** und innerer Hülle **2** des Reaktors **1** angeordnet sein. Bei einer andern Einstellung des Bypass-Ventils das überkritische Wasser, in dem Synthesegas gelöst ist, vollständig in den Bypass und durch den Wärmetauschern WT1 **9** geleitet. Diese Einstellungen sind beispielshaft. Weitere Einstellungen des Bypass-Ventils sind möglich.

In bevorzugten Ausführungsformen des erfindungsgemäßen Reaktors **1** befindet sich der Bypass und der Wärmetauscher WT4 **10** mit Bypass-Ventil in unmittelbarer Nähe des Abscheidebereichs **3** in der inneren Hülle **2**. Der Bypass und der Wärmetauscher WT4 **10** sind mit dem Abscheidebereich **3** verbunden. In bevorzugten Ausführungsformen des Reaktors **1** befindet sich der Wärmetauscher WT4 **10** mit Bypass-Ventil in unmittelbarer Nähe des Abscheidebereichs **3** und wird von dem auf 550 Grad Celsius erwärmten komprimierten wässrigen Vielkomponentengemisch durchströmt, nachdem die Wertstofffraktion WT1 abgetrennt wurde und dabei im Wärmetauscher WT4 **10** von 550 Grad Celsius weiter erwärmt wird, beispielsweise auf 560 Grad Celsius, 570 Grad Celsius, 580 Grad Celsius, 590 Grad Celsius, 600 Grad Celsius, 610 Grad Celsius, 620 Grad Celsius oder mehr. Der erfindungsgemäße Reaktor **1** kann in der inneren Hülle **2** im Aufheizbereich **4** weitere Heizelemente umfassen, beispielsweise eine oder mehrere elektrische Heizungen.

In bevorzugten Ausführungsformen umfasst der erfindungsgemäße Reaktor **1** eine druckdicht abschließbare innere Hülle **2**,
in der inneren Hülle **2** einen Abscheidebereich **3** mit einem oder mehreren Wärmetauschern zur Erwärmung von komprimiertem wässrigen Vielkomponentengemisch auf bis zu 550 Grad Celsius und einen oder mehrere Abscheider zur Abtrennung von Wertstoffen aus dem komprimierten wässrigen Vielkomponentengemisch,
in der inneren Hülle **2** einen Aufheizbereich **4** zur Erwärmung von komprimiertem wässrigen Vielkomponentengemisch nach der Abtrennung von Wertstoffen auf 600 bis 700 Grad Celsius und zur Temperaturregulierung im Abscheidebereich **4** umfassend einen Wärmetauscher WT4 **10**, einen Bypass und ein Bypass-Ventil,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
wobei Abscheidebereich **3**, Aufheizbereich **4** und Verweilbereich **5** als Kolonne angeordnet sind. Der Reaktor **1** kann eine äußere Hülle **6**, die die innere Hülle **2** umgibt und zwischen innerer Hülle **2** und äußerer Hülle **6** einen zweiten Druckraum **16** umfassen.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT3 **13** und Abscheider A3 zur Erwärmung von komprimiertem wässrigen Vielkomponentengemisch auf eine Temperatur von bis zu 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf eine Temperatur von bis zu 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf eine Temperatur von bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstofffraktion WF3, Wertstofffraktion WF2, Wertstofffraktion WF1 auf 600 bis 700 Grad Celsius und zur Regulierung der Temperatur im Wärmetauscher WT1 **9** umfassend einen Bypass, einen Wärmetauscher WT4 **10** und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind. Der Reaktor **1** kann eine äußere Hülle **6**, die die innere Hülle **2** umgibt und zwischen innerer Hülle **2** und äußerer Hülle **6** einen zweiten Druckraum **16** umfassen.

In bevorzugten Ausführungsformen des erfindungsgemäßen Reaktors **1** wird das komprimierte wässrige Vielkomponentengemisch im Aufheizbereich **4** durch ein oder mehrere Heizelemente aufgeheizt, die außerhalb der inneren Hülle **2** des Reaktors **1** angeordnet sind. In besonders bevorzugten Ausführungsformen umfasst der erfindungsgemäße Reaktor **1** eine äußere Hülle **6**, die die innere Hülle **2** umgibt, zwischen innerer Hülle **2** und äußerer Hülle **6** einen zweiten Druckraum **16** und im zweiten Druckraum **16** ein oder mehrere Heizelemente zur Erwärmung des komprimierten wässrigen Vielkomponentengemisches auf 600 bis 700 Grad Celsius im Aufheizbereich **4**. In bevorzugten Ausführungsformen des Reaktors **1** wird das komprimierte wässrige Vielkomponentengemisch im Aufheizbereich **4** durch ein oder mehrere Heizelemente aufgeheizt, die im zweiten Druckraum **16** zwischen der inneren Hülle **2** und der äußeren Hülle **6** des Reaktors **1** angeordnet sind. In bevorzugten Ausführungsformen des Reaktors 1 wird das komprimierte wässrige Vielkomponentengemisch im Aufheizbereich **4** durch ein oder mehrere elektrische Heizungen aufgeheizt, die im zweiten Druckraum **16** zwischen der inneren Hülle **2** und der äußeren Hülle **6** des Reaktors **1** angeordnet sind und die von der Außenseite der inneren Hülle **2** das wässrige Vielkomponentengemisch im Aufheizbereich **4** in der inneren Hülle **2** aufheizen.

In einer Ausführungsformen umfasst der erfindungsgemäße Reaktor **1** eine druckdicht abschließbare innere Hülle **2**,
in der inneren Hülle **2** einen Abscheidebereich **3** mit einem oder mehreren Wärmetauschern zur Erwärmung von komprimiertem wässrigen Vielkomponentengemisch auf bis zu 550 Grad Celsius und einen oder mehrere Abscheider zur Abtrennung von Wertstoffen aus dem komprimierten wässrigen Vielkomponentengemisch,
in der inneren Hülle **2** einen Aufheizbereich **4** zur Erwärmung von komprimiertem wässrigen Vielkomponentengemisch nach der Abtrennung von Wertstoffen auf 600 bis 700 Grad Celsius,
in der inneren Hülle **2** einen Verweilbereich **5** zur überkritischen hydrothermalen Vergasung von komprimiertem wässrigen Vielkomponentengemisch nach dem Aufheizen auf 600 bis 700 Grad Celsius,
wobei Abscheidebereich **3**, Aufheizbereich **4** und Verweilbereich **5** als Kolonne angeordnet sind,
eine äußere Hülle **6**, die die innere Hülle **2** umgibt und zwischen innerer Hülle **2** und äußerer Hülle **3** einen zweiten Druckraum **16**,
außerhalb der inneren Hülle **2** ein oder mehrere Heizelemente, die im zweiten Druckraum **16** angeordnet sind, zur Erwärmung von komprimiertem wässrigen Vielkomponentengemisch im Aufheizbereich **3**.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT3 **13** und Abscheider A3 zur Erwärmung von komprimiertem wässrigen Vielkomponentengemisch auf bis zu 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf bis zu 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstofffraktion WF3, Wertstofffraktion WF2, Wertstofffraktion WF1 auf 600 bis 700 Grad Celsius und zur Regulierung der Temperatur im Wärmetauscher WT1 **9** umfassend einen Bypass, einen Wärmetauscher WT4 **10** und ein Bypass-Ventil und zur Regulierung der Temperatur im Wärmetauscher WT1 **9**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind,
eine äußere Hülle **6**, die die innere Hülle **2** umgibt,
zwischen innerer Hülle und äußerer Hülle einen zweiten Druckraum **16**,
wobei im zweiten Druckraum **16** ein oder mehrere Heizelemente angeordnet sind zur Erwärmung des komprimierten wässrigen Vielkomponentengemisches auf 600 bis 700 Grad Celsius im Aufheizbereich **4**.

In bevorzugten Ausführungsformen umfasst der Reaktor **1** im Aufheizbereich **4** einen Überhitzer. In bevorzugten Ausführungsformen umfasst der Reaktor **1** im Aufheizbereich **4** eine Rohrstrecke, die von außen beheizt wird, vorzugsweise elektrisch beheizt wird. In bevorzugten Ausführungsformen umfasst der Reaktor **1** im Aufheizbereich **4** einen Wärmetauscher WT5, vorzugsweise einen Rohrwärmetauscher. In bevorzugten Ausführungsformen umfasst nur ein Teil des Aufheizbereichs **4** einen Überhitzer und / oder eine Rohrstrecke, die von außen beheizt wird, und / oder einen Rohrwärmetauscher. In diesem Teil des Aufheizbereichs **4**, beispielsweise im Überhitzer, in der Rohrstrecke, im Rohrwärmetauscher, die in diesem Teil des Aufheizbereichs **4** angeordnet sind, wird das komprimierte wässrige Vielkomponentengemisch durch einen Ringspalt geführt, der von außen und von innen erwärmt wird. Im Überhitzer, in der Rohrstrecke und / oder im Rohrwärmetauscher, die im Aufheizbereich **4** angeordnet sind, wird das komprimierte wässrige Vielkomponentengemisch von außen vorzugsweise elektrisch erwärmt und von innen durch das überkritische Wasser, in dem Synthesegas gelöst ist, erwärmt. Die unterschiedlichen Phasen sind dabei voneinander getrennt.

In bevorzugten Ausführungsformen wird das überkritische Wasser, in dem Synthesegas gelöst ist, durch die Synthesegasleitung **11** geleitet, die im Inneren der inneren Hülle **2** im Aufheizbereich **4** angeordnet ist. In bevorzugten Ausführungsformen des Reaktors **1** führt die Synthesegasleitung **11** durch den Aufheizbereich **4** und hat zumindest in Teilen des Aufheizbereichs **4** einen Durchmesser, der fast dem Durchmesser der inneren Hülle **2** in diesem Bereich entspricht. Dabei bleibt zwischen Synthesegasleitung **11** und innerer Hülle **2** ein Ringspalt. Das komprimierte wässrige Vielkomponentengemisch strömt durch den Ringspalt zwischen Synthesegasleitung **11** und innerer Hülle **2** im Aufwärmbereich **4** und wird dabei durch das überkritische Wasser, das durch die Synthesegasleitung **11** geleitet wird, von innen erwärmt. Das komprimierte wässrige Vielkomponentengemisch strömt durch den Ringspalt zwischen Synthesegasleitung **11** und innerer Hülle **2** im Aufwärmbereich **4** und wird dabei von außen durch Heizelemente, die im zweiten Druckraum **16** angeordnet sind, erwärmt. Diese Anordnung im Aufheizbereich **4** hat den Vorteil, dass eine große Fläche für die Wärmeübertragung zur Verfügung steht.

Der Durchmesser des Ringspalts ist die Strecke von der äußeren Wand der Synthesegasleitung **11** bis zur inneren Wand der inneren Hülle **2**. Der Ringspalt kann an verschiedenen Stellen des Reaktors **1** einen unterschiedlichen Durchmesser haben. In bevorzugten Ausführungsformen des Reaktors **1** hat der Ringspalt im Aufheizbereich **4** einen geringeren Durchmesser als im Verweilbereich **5**. Der Ringspalt kann auch innerhalb des Aufheizbereichs **4** unterschiedliche Durchmesser aufweisen.

In bevorzugten Ausführungsformen des Reaktors **1** hat der Ringspalt im Aufheizbereich **4** einen Durchmesser von maximal 20 mm, vorzugsweise 10 mm, besonders bevorzugt 4 bis 6 mm oder weniger. In bevorzugten Ausführungsformen des Reaktors **1** hat der Ringspalt im Aufheizbereich **4** zumindest teilweise einen Durchmesser von maximal 20 mm, vorzugsweise 10 mm, besonders bevorzugt 4 bis 6 mm oder weniger. In bevorzugten Ausführungsformen des Reaktors **1** hat der Ringspalt im Aufheizbereich **4** einen Durchmesser von maximal 20 mm, vorzugsweise 10 mm, besonders bevorzugt 4 bis 6 mm oder weniger und das komprimierte wässrige Vielkomponentengemisch wird im Aufheizbereich **4** durch ein oder mehrere Heizelemente aufgeheizt, die im zweiten Druckraum **16** zwischen der inneren Hülle **2** und der äußeren Hülle **6** des Reaktors **1** angeordnet sind und das komprimierte wässrige Vielkomponentengemisch, wenn es den Ringspalt durchströmt, auf 600 bis 700 Grad Celsius erwärmen. In bevorzugten Ausführungsformen des Reaktors **1** hat der Ringspalt im Aufheizbereich **4** zumindest teilweise einen Durchmesser von maximal 20 mm, vorzugsweise 10 mm, besonders bevorzugt 4 mm bis 6 mm oder weniger und das komprimierte wässrige Vielkomponentengemisch wird im Ringspalt im Aufheizbereich **4** zumindest teilweise durch ein oder mehrere Heizelemente aufgeheizt, die im zweiten Druckraum **16** zwischen der inneren Hülle **2** und der äußeren Hülle **6** des Reaktors **1** angeordnet sind und das komprimierte wässrige Vielkomponentengemisch beim Durchströmen des Ringspalts im Aufheizbereich **4** auf 600 bis 700 Grad Celsius erwärmt. Beispielsweise umfasst der Reaktor **1** ein, zwei, drei, vier, fünf, sechs, sieben, acht, neun, zehn oder mehr, beispielsweise 14, 18, 20, 28, 30 oder mehr Heizelemente, vorzugsweise elektrische Heizelemente im zweiten Druckraum **16**.

Bedingt durch den geringen Durchmesser des Ringspalts im Aufheizbereich **4** oder zumindest in Teilen des Aufheizbereichs **4** ist die Strömungsgeschwindigkeit des komprimierten wässrigen Vielkomponentengemisches in diesem Teil des Aufheizbereichs **4** sehr hoch. Der Ringspalt im Aufheizbereich **4** wird so dimensioniert, dass es einen optimalen Wärmetransport in das komprimierte wässrige Vielkomponentengemisch gibt. In unterschiedlichen Ausführungsformen des Reaktors **1** wird der Ringspalt, insbesondere der Durchmesser des Ringspalts im Aufheizbereich **4** abhängig von dem wässrigen Vielkomponentengemisch, das als Edukt eingesetzt wird und dem optimalen Wärmetransport angepasst.

Der geringe Durchmesser des Ringspalts im Aufheizbereich **4** durch das das komprimierte wässrige Vielkomponentengemisch strömt und die große Fläche zur Übertragung von Wärme auf das komprimierte wässrige Vielkomponentengemisch im Aufheizbereich **4** oder zumindest in Teilen des Aufheizbereichs **4** ermöglicht eine gute Wärmeübertragung und damit eine schnelle und vollständige Erwärmung von strömendem komprimiertem wässrigen Vielkomponentengemisch auf bis zu 700 Grad Celsius, vorzugsweise auf bis zu 680 Grad Celsius. Durch die hohe Strömungsgeschwindigkeit von komprimiertem wässrigen Vielkomponentengemisch im Aufheizbereich **4** oder zumindest in Teilen des Aufheizbereichs **4** wird die Korrosion des Reaktors **1** minimiert. Je nach Zusammensetzung des wässrigen Vielkomponentengemisches, Durchmesser des Ringspalts und Anordnung der Heizelemente im Aufheizbereich **4** kann die Strömungsgeschwindigkeit von wässrigem komprimierten Vielkomponentengemisch im Aufheizbereich **4** variiert werden.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend ein oder mehrere Heizelemente zur Erwärmung von komprimiertem wässrigen Vielkomponentengemisch auf bis zu 550 Grad Celsius und einen oder mehrere Abscheider zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend einen Rohrwärmetauscher WT5, einen Bypass, einen Wärmetauscher WT4 **10** und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind,
wobei der Wärmetauscher WT4 **10** an den Abscheidebereich **3** angrenzt und der Rohrwärmetauscher WT5 mit dem Bypass und dem Wärmetauscher WT4 **10** verbunden ist. Vorzugsweise ist der Rohrwärmetauscher in einer aufrechtstehenden Kolonne im Aufheizbereich **4** über dem Wärmetauscher WT4 **10** angeordnet.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend ein oder mehrere Heizelemente zur Erwärmung von komprimiertem wässrigen Vielkomponentengemisch auf bis zu 550 Grad Celsius und einen oder mehrere Abscheider zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind,
wobei die Synthesegasleitung **11** zur Erwärmung des komprimierten wässrigen Vielstoffgemisches im Aufheizbereich **4** in einem Teil des Aufheizbereichs **4** oder im ganzen Aufheizbereich **4** mit der inneren Hülle **2** einen Ringspalt bildet.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend ein oder mehrere Heizelemente zur Erwärmung von komprimiertem wässrigen Vielkomponentengemisch auf bis zu 550 Grad Celsius und einen oder mehrere Abscheider zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind,
wobei die Synthesegasleitung **11** zur Erwärmung des komprimierten wässrigen Vielstoffgemisches im Aufheizbereich **4** in einem Teil des Aufheizbereichs **4** oder im ganzen Aufheizbereich **4** mit der inneren Hülle **2** einen Ringspalt bildet,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere Heizelemente, vorzugsweise elektrische Heizelemente zur Erwärmung des komprimierten wässrigen Vielkomponentengemisches im Aufheizbereich **4** angeordnet sind.

Der Teil im zweiten Druckraum **16** in dem ein oder mehrere Heizelemente zur Erwärmung des komprimierten wässrigen Vielkomponentengemisches im Aufheizbereich **4** angeordnet sind, ist vorzugsweise der Teil des zweiten Druckraums **16**, in dem in der inneren Hülle **2** der Ringspalt angeordnet ist.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend ein oder mehrere Heizelemente zur Erwärmung von komprimiertem wässrigen Vielkomponentengemisch auf bis zu 550 Grad Celsius und einen oder mehrere Abscheider zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend eine Synthesegasleitung **11**, einen Bypass, einen Wärmetauscher WT4 **10** und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als Kolonne angeordnet sind,
wobei die Synthesegasleitung **11** zur Erwärmung des komprimierten wässrigen Vielstoffgemisches in einem Teil des Aufheizbereichs **4** oder im ganzen Aufheizbereich **4** mit der inneren Hülle **2** einen Ringspalt bildet,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere Heizelemente, vorzugsweise elektrische Heizelemente zur Erwärmung des komprimierten wässrigen Vielkomponentengemisches im Aufheizbereich **4** angeordnet sind. Der Bypass und der Wärmetauscher WT4 **10** sind vorzugsweise über dem Abscheidebereich **3** angeordnet, und mit dem oder den Wärmetauschern im Abscheidebereich **3** verbunden. In bevorzugten Ausführungsformen des Reaktors **1** ist angrenzend an den Wärmetauscher WT4 **10** die Synthesegasleitung **11** im Aufheizbereich **4** angeordnet. Die Synthesegasleitung **11** ist mit dem Wärmetauscher WT4 **10** und dem Bypass verbunden. Das überkritische Wasser, in dem Synthesegas gelöst ist, wird durch die Synthesegasleitung **11** in den Wärmetauscher WT4 **10** und / oder den Bypass geleitet und von dort in den Abscheidebereich **3**. In bevorzugten Ausführungsformen des Reaktors **1** ist der Ringspalt in der aufrechtstehenden Kolonne im Aufheizbereich **4** über dem Wärmetauscher WT4 **10** angeordnet. Vorzugsweise sind in der Kolonne Bypass und Wärmetauscher WT4 **10** nebeneinander in der aufrechtstehenden Kolonne angeordnet. Vorzugsweise ist der Ringspalt in der aufrechtstehenden Kolonne im Aufheizbereich **4** über dem Bypass und dem Wärmetauscher WT4 **10** angeordnet.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT3 **13** und Abscheider A3 zur Erwärmung von komprimiertem wässrigen Vielkomponentengemisch auf bis zu 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf bis zu 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend eine Synthesegasleitung **11**, einen Bypass, Wärmetauscher WT4 **10**, ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** mit der inneren Hülle **2** einen Ringspalt bildet,
wobei der Ringspalt einen Durchmesser von weniger als 20 mm hat,
wobei der Ringspalt in der aufrechtstehenden Kolonne oberhalb des Bypass und des Wärmetauschers WT4 **10** angeordnet ist,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere elektrische Heizelemente zur Erwärmung des komprimierten wässrigen Vielkomponentengemisches im Aufheizbereich **4** angeordnet sind.

In bevorzugten Ausführungsformen des Reaktors **1** hat der Aufheizbereich **4** eine Länge von 2 m bis 10 m, vorzugsweise 3 m bis 5 m. Vorzugsweise umfasst der Reaktor **1** einen Ringspalt mit einem Durchmesser von weniger als 10 mm, vorzugsweise 4 mm bis 6 mm. In bevorzugten Ausführungsformen des Reaktors **1** hat der Aufheizbereich **4** eine Länge von 3 m bis 5 m und umfasst einen Ringspalt. In bevorzugten Ausführungsformen des Reaktors **1** hat der Aufheizbereich **4** eine Länge von 5 m oder weniger und der Ringspalt einen Durchmesser von 10 mm oder weniger und umfasst einen zweiten Druckraum **16**, der vorzugsweise ein oder mehrere elektrische Heizungen umfasst. In bevorzugten Ausführungsformen des Reaktors **1** hat der Aufheizbereich **4** eine Länge von 3 m bis 5 m und umfasst im Aufheizbereich einen Wärmetauschers WT4 **9** und einen Ringspalt mit einem Durchmesser von 4 mm bis 10 mm oder weniger, der oberhalb des Wärmetauschers WT4 **9** angeordnet ist und im zweiten Druckraum **16** ein oder mehrere Heizelemente zur Erwärmung von komprimiertem wässrigem Vielkomponentengemisch im Ringspalt.

Im Aufheizbereich **4** wird das komprimierte wässrige Vielkomponentengemisch auf 600 bis 700 Grad Celsius erwärmt, vorzugsweise ungefähr 600 bis 700 Grad Celsius, beispielsweise auf 570 Grad Celsius, 580 Grad Celsius, 590 Grad Celsius, 600 Grad Celsius, 610 Grad Celsius, 620 Grad Celsius, 630 Grad Celsius, 640 Grad Celsius, 650 Grad Celsius, 660 Grad Celsius, 670 Grad Celsius, 680 Grad Celsius, 690 Grad Celsius, 700 Grad Celsius, 705 Grad Celsius, 710 Grad Celsius. Die überkritische hydrothermale Vergasung kann beispielsweise durch den Zusatz von Katalysatoren bei geringeren Temperaturen als 600 bis 700 Grad Celsius erfolgen.

Der erfindungsgemäße Reaktor **1** umfasst in der inneren Hülle **2** einen Verweilbereich **5** zur überkritischen hydrothermalen Vergasung des komprimierten wässrigen Vielkomponentengemisches. Der Verweilbereich **5** ist mit dem Aufheizbereich **4** verbunden. Das komprimierte wässrige Vielkomponentengemisch strömt nach dem Aufheizen auf 600 bis 700 Grad Celsius in den Verweilbereich **5** und durchströmt den Verweilbereich **5** in 0,5 bis 7 Minuten, vorzugsweise in 1 bis 5 Minuten, besonders bevorzugt in 2 bis 3 Minuten. Dabei wird das komprimierte wässrige Vielkomponentengemisch bzw. die im wässrigen Vielkomponentengemisch enthaltenen organischen Verbindungen und organischen Bestandteile unter überkritischen Reaktionsbedingungen zu Synthesegas vergast. Bei der überkritischen hydrothermalen Vergasung wirkt das überkritische Wasser als Reaktionsmedium und als Reaktant für die im wässrigen Vielkomponentengemisch enthaltenen organischen Verbindungen und Bestandteile. Die organischen Verbindungen und Bestandteile werden bei der überkritischen hydrothermalen Vergasung zu Synthesegas umgesetzt. Das Synthesegas (Vergasungsprodukt, Produkt) ist bei Drücken von 25 bis 35 MPa und den im Verweilbereich **5** vorliegenden Temperaturen in überkritischem Wasser gelöst.

Der Verweilbereich **5** ist mit der Synthesegasleitung **11** verbunden. In besonders bevorzugten Ausführungsformen des Reaktors **1** umfasst die innere Hülle **2** im Verweilbereich **5** die Synthesegasleitung **11**. Vorzugsweise ist die Synthesegasleitung **11** im Inneren des Verweilbereichs **5** angeordnet. Die Synthesegasleitung **11** ragt dabei vom Aufheizbereich **4** in den Verweilbereich **5** fast bis zum oberen Ende des Verweilbereichs **5**, bis beispielsweise bis in das obere Drittel oder in das obere Viertel, vorzugsweise bis in das obere Fünftel oder in das obere Sechstel des Verweilbereichs **5**, besonders bevorzugt bis in das obere Siebtel oder in das obere Achtel des Verweilbereichs **5**. Das obere Ende des Verweilbereichs **5** ist der Teil des Verweilbereichs **5** der am weitesten vom Aufheizbereich **4** entfernt ist. Das Ende der Synthesegasleitung **11** weist am oberen Ende ein oder mehrere Öffnungen auf, vorzugsweise ist die Synthesegasleitung **11** am oberen Ende offen. In besonders bevorzugten Ausführungsformen des Reaktors **1** umfasst die innere Hülle **2** im Verweilbereich **5** die an diesem Ende offene Synthesegasleitung **11**. In bevorzugten Ausführungsformen des Reaktors **1** hat die innere Hülle **2** im Verweilbereich **5** die Form eines Rohres und am Ende des Verweilbereichs **5** einen Klöppelbogen und umfasst im Inneren des Verweilbereichs **5** eine Synthesegasleitung **11**, die mindestens bis in das obere Drittel, vorzugsweise mindestens bis in das obere Viertel des Verweilbereichs **5** reicht. Durch das offene Ende bzw. die eine oder mehrere Öffnungen, ist die Synthesegasleitung **11** mit dem Verweilbereich **5** verbunden. In besonders bevorzugten Ausführungsformen des Reaktors **1** umfasst die innere Hülle **2** im Verweilbereich **5** die Synthesegasleitung **11**, wobei die Synthesegasleitung **11** in einem Teil des Verweilbereichs **5** oder im ganzen Verweilbereich **5** mit der inneren Hülle **2** einen Ringspalt bildet und der Ringspalt im Verweilbereich **5** zumindest teilweise einen Durchmesser von mindestens 50 mm hat und wobei die Synthesegasleitung **11** zur Einleitung von überkritischem Wasser, in dem Synthesegas gelöst ist, im Verweilbereich **5** mindestens eine Öffnung aufweist.

Durch die Ausgestaltung und Anordnung der Synthesegasleitung **11** im Aufheizbereich **4** und im Verweilbereich **5** strömt wässriges Vielkomponentengemisch aus dem Aufheizbereich **4** in den Verweilbereich **5**. In besonders bevorzugten Ausführungsformen des Reaktors **1** hat die Synthesegasleitung **11** im Verweilbereich **5** einen geringeren Durchmesser als im Aufheizbereich **4**. In besonders bevorzugten Ausführungsformen des Reaktors **1** hat Ringspalt im Verweilbereich **5** einen größeren Durchmesser als im Aufheizbereich **4**. In bevorzugten Ausführungsformen des Reaktors **1** weitet sich der dem komprimierten wässrigen Vielkomponentengemisch zur Durchströmung zur Verfügung stehende Durchmesser (der Ringspalt) beim Übergang vom Aufheizbereich **4** in den Verweilbereich **5** auf, beispielsweise weist der Übergang die Form eines Trichters auf, mit dem weiten Ende des Trichters dem Verweilbereich **5** zugewandt. In bevorzugten Ausführungsformen des Reaktors **1** weist der Verweilbereich **5** einen Durchmesser auf, der größer ist als der Durchmesser des Aufheizbereiches **4**. In bevorzugten Ausführungsformen des Reaktors **1** beträgt der Durchmesser im Verweilbereich **5** 2 m oder weniger, beispielsweise 1,5 m oder 1 m, vorzugsweise 500 mm bis 900 mm, besonders bevorzugt 600 bis 800 mm , beispielsweise 750 mm, 700 mm oder 650 mm. In bevorzugten Ausführungsformen des Reaktors **1** beträgt der Durchmesser des Ringspalts im Verweilbereich **5** 1 m oder weniger, beispielsweise 700 mm oder weniger, vorzugsweise 50 bis 500 mm, beispielsweise 100 bis 400 mm, vorzugsweise 150 mm bis 300 mm, beispielsweise 150 mm, 200 mm, 250 mm, 300 mm. In bevorzugten Ausführungsformen hat der Verweilbereich **5** im Reaktor **1** eine Länge von 0,5 m bis 2 m, beispielsweise 0,6 m bis 1,8 m oder 0,7 bis 1,5 m, vorzugsweise 0,8 bis 1,1 m. In bevorzugten Ausführungsformen des Reaktors **1** hat die innere Hülle **2** im Verweilbereich **5** die Form eines Rohres und am Ende des Verweilbereichs **5** einen Klöppelbogen.

Durch den aufgeweiteten Durchmesser im Verweilbereich **5**, verringert sich die Strömungsgeschwindigkeit des komprimierten wässrigen Vielkomponentengemisches. Im Verweilbereich **5** geht die Strömungsgeschwindigkeit des komprimierten wässrigen Vielkomponentengemisches gegen Null. Dadurch haben große Kohlenwasserstoffe / Kohlenwasserstoffe mit starken Bindungen wie langkettige Kohlenwasserstoffe und Aromaten eine größere Verweilzeit als kleinere und kürzere Kohlenwasserstoffe. Das erzeugte Synthesegas hat eine geringere Dicht als das komprimierte wässrige Vielkomponentengemisch und steigt im Verweilbereich **5** in der aufrechtstehenden Kolonne auf. Dabei ist das Synthesegas in dem überkritischen Wasser gelöst. Das in überkritischem Wasser gelöste Synthesegas wird am oberen Ende des Verweilbereichs **5** umgelenkt und strömt in die Synthesegasleitung **11**, die mit ihrem oberen, vorzugsweise offenen Ende in dem Verweilbereich **5** angeordnet ist.

In weiteren Ausführungsformen umfasst der erfindungsgemäße Reaktor **1** eine druckdicht abschließbare innere Hülle **2**,
in der inneren Hülle **2** einen Abscheidebereich **3** umfassend einen oder mehrere Wärmetauscher und Abscheider zur Erwärmung von komprimiertem wässrigen Vielkomponentengemisch auf bis zu 550 Grad Celsius und zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad umfassend eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** und einem Teil des Verweilbereichs **5** mit der inneren Hülle **2** einen Ringspalt bildet,
wobei der Ringspalt im Aufheizbereich **3** einen Durchmesser von weniger als 20 mm, vorzugsweise 4 bis 10 mm hat und der Ringspalt im Verweilbereich **5** einen Durchmesser von 150 mm oder mehr, vorzugsweise 200 bis 300 mm hat,
wobei die Synthesegasleitung **11** im Verweilbereich **5** angeordnet ist und am Ende mindestens eine Öffnung aufweist, wobei das Ende der Synthesegasleitung **11** im oberen Drittel des Verweilbereichs **5** angeordnet ist.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT3 **13** und Abscheider A3 zur Erwärmung von komprimiertem wässrigen Vielkomponentengemisch auf bis zu 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf bis zu 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstofffraktionen WF3, WF2, WF1 auf 600 bis 700 Grad Celsius umfassend eine Synthesegasleitung **11**, einen Bypass, einen Wärmetauscher WT4 **10** und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** mit der inneren Hülle **2** einen Ringspalt bildet,
wobei der Ringspalt im Aufheizbereich **4** einen Durchmesser von weniger als 10 mm hat, wobei der Ringspalt im Aufheizbereich **4** in der aufrechtstehenden Kolonne oberhalb des Bypass und des Wärmetauschers WT4 **10** angeordnet ist,
wobei der Ringspalt im Verweilbereich **5** zumindest teilweise einen Durchmesser von mindestens 150 mm hat,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere elektrische Heizelemente zur Erwärmung des komprimierten wässrigen Vielkomponentengemisches im Aufheizbereich **4** angeordnet sind,
wobei die Synthesegasleitung **11** bis mindestens in das obere Drittel des Verweilbereichs **5** ragt und im Verweilbereich **5** mindestens eine Öffnung umfasst, vorzugsweise am Ende offen ist. Vorzugsweise hat die Synthesegasleitung **11** beim Übergang vom Aufheizbereich **4** in den Verweilbereich **5** die Form eines Trichters mit der weiten Seite des Trichters dem Verweilbereich **5** zugewandt.

In bevorzugten Ausführungsformen des erfindungsgemäßen Reaktors **1** werden Anordnung, Form und Abmessungen (Durchmesser und Länge) von Aufheizbereich **4**, Verweilbereich **5** und Synthesegasleitung **11** in der Kolonne so ausgewählt, dass das komprimierte wässrige Vielkomponentengemisch beim Durchströmen des Aufheizbereichs **4** auf die Temperatur der überkritischen hydrothermalen Vergasung, nämlich 600 bis 700 Grad Celsius erwärmt wird, beim Übergang in den Verweilbereich **5** expandiert und den Verweilbereich **5** innerhalb von 0,5 bis 7 min, vorzugsweise innerhalb von 1 bis 5 Minuten, beispielsweise innerhalb von 2 bis 3 Minuten durchströmt. Je nach Zusammensetzung von komprimiertem wässrigen Vielkomponentengemisch verweilen einzelne Komponenten, die in dem komprimierten wässrigen Vielkomponentengemisch enthalten sind, länger oder kürzer im Verweilbereich **5** als andere. Im Verweilbereich **5** wird das komprimierte wässrige Vielkomponentengemisch unter überkritischen Bedingungen hydrothermal vergast, wobei als Vergasungsprodukt Synthesegas gebildet wird, das unter diesen Druck- und Temperaturbedingungen in überkritischem Wasser gelöst ist. Das überkritische Wasser, in dem Synthesegas gelöst ist, wird am Ende des Verweilbereichs **5** in die Synthesegasleitung **11** umgelenkt. In bevorzugten Ausführungsformen weist die innere Hülle **2** am Ende des Verweilbereichs **5** zu diesem Zweck die Form eines Klöppelbogens auf.

In bevorzugten Ausführungsformen des Reaktors **1** befindet sich im Inneren des Verweilbereichs **5** und im Inneren des Aufheizbereichs **4** die Synthesegasleitung **11**. In bevorzugten Ausführungsformen des Reaktors **1** beginnt die Synthesegasleitung **11** im Inneren des Verweilbereichs **5** unterhalb des oberen Endes des Verweilbereichs **4**, beispielsweise unterhalb des Klöppelbogens, wobei die Synthesegasleitung **11** an diesem Ende offen ist, so dass erzeugtes Synthesegas, das in überkritischem Wasser gelöst ist, bei bestimmungsgemäßem Gebrauch des Reaktors **1** in die Synthesegasleitung **11** strömt. In bevorzugten Ausführungsformen umfasst der Reaktor **1** eine am oberen Ende offene Synthesegasleitung **11**, die innerhalb der inneren Hülle **2** des Reaktors **1** im Verweilbereich **5** angeordnet ist und durch den Verweilbereich **5** und durch den Aufheizbereich **4** führt, wobei sich der Durchmesser der Synthesegasleitung **11** beim Übergang der Synthesegasleitung **11** vom Verweilbereich **5** in den Aufheizbereich **4** vergrößert (aufweitet).

Die Synthesegasleitung **11** dient bei bestimmungsgemäßem Gebrauch der Leitung von überkritischem Wasser, in dem Synthesegas gelöst ist, durch den Reaktor **1**. Die Synthesegasleitung **11** dient bei bestimmungsgemäßem Gebrauch auch der Trennung von überkritischem Wasser, in dem Synthesegas gelöst ist, von komprimiertem wässrigem Vielkomponentengemisch im ersten Druckraum **15** innerhalb der inneren Hülle **2** des Reaktors **1**. Die Synthesegasleitung **11** leitet in besonderen Ausführungsformen das überkritische Wasser, in dem Synthesegas gelöst ist, in den Wärmetauscher WT4 **10** und gegebenenfalls in den Bypass, sofern vorhanden. Die Synthesegasleitung **11** leitet in besonderen Ausführungsformen das überkritische Wasser, in dem Synthesegas gelöst ist, in den Wärmetauscher WT1 **9**. Die Synthesegasleitung **11** leitet in besonderen Ausführungsformen das überkritische Wasser, in dem Synthesegas gelöst ist, in den obersten Wärmetauscher in der Kolonne, beispielsweise Wärmetauscher WT4 **10** oder Wärmetauscher WT1 **9**. In bevorzugten Ausführungsformen des erfindungsgemäßen Reaktors **1** umfasst der Reaktor **1** einen Wärmetauscher WT4 **10** und die Synthesegasleitung **11** mündet in den Wärmetauscher WT4 **10**, vorzugsweise in den Wärmetauscher WT4 **10** mit Bypass-Ventil zur Regulierung des Synthesegasstroms und der Temperatur in den Wärmetauschern WT4 **10** und WT1 **9**. In bevorzugten Ausführungsformen des Reaktors **1** ist der Verweilbereich **5** mit der Synthesegasleitung **11** verbunden und die Synthesegasleitung **11** führt zur Erwärmung von komprimiertem wässrigen Vielkomponentengemisch vom Verweilbereich **5** zunächst durch den Aufheizbereich **4**, durch den Wärmetauscher WT4 **10** mit Bypass Ventil und durch den Bypass, in den Abscheidebereich **3** durch den Wärmetauscher WT1 **9**, sofern vorhanden durch den Wärmetauscher WT2 **12**, sofern vorhanden durch den Wärmetauscher WT3 **13** zur Erwärmung von komprimiertem wässrigem Vielkomponentengemisch. In bevorzugten Ausführungsformen des Reaktors **1** ist der Verweilbereich **5** mit der Synthesegasleitung **11** verbunden und die Synthesegasleitung **11** führt vom Verweilbereich **5** zunächst durch in den Aufheizbereich, durch den Rohrwärmetauscher WT5, durch den Wärmetauscher WT4 **10** mit Bypass Ventil und den Bypass, in den Abscheidebereich **3** durch den Wärmetauscher WT1 **9**, sofern vorhanden durch den Wärmetauscher WT2 **12**, sofern vorhanden durch den Wärmetauscher WT3 **13** zur Erwärmung von komprimiertem wässrigem Vielkomponentengemisch. In bevorzugten Ausführungsformen ist die Synthesegasleitung **11** mit dem Bypass und dem Bypass-Ventil verbunden.

Die Synthesegasleitung **11** ist bei bestimmungsgemäßem Gebrauch ein Mittel, um komprimiertes wässriges Vielkomponentengemisch mit überkritischem Wasser, in dem Synthesegas gelöst ist, und das bei der überkritischen hydrothermalen Vergasung erzeugt wird, im Gegenstrom zu erwärmen, ohne dass sich die Phasen mischen. Bei dieser energetisch vorteilhaften Prozessführung wird die Prozesswärme der überkritischen hydrothermalen Vergasung genutzt, um komprimiertes wässriges Vielkomponentengemisch (= neues Edukt) zu erwärmen. Gleichzeitig wird dadurch das überkritische Wasser, in dem Synthesegas gelöst ist, abgekühlt. In bevorzugten Ausführungsformen der Erfindung hat das komprimierte wässrige Vielkomponentengemisch beim Eintritt in die innere Hülle **2** des Reaktors **1** eine Temperatur von ca. 100 Grad Celsius oder weniger, beispielsweise 50 bis 70 Grad Celsius, vorzugsweise 60 Grad Celsius und das Wasser, in dem Synthesegas gelöst ist, beim Austritt aus der inneren Hülle **2** eine Temperatur von ca. 110 Grad Celsius oder weniger, beispielsweise 60 bis 80 Grad Celsius, vorzugsweise 70 Grad Celsius.

In weiteren Ausführungsformen umfasst der erfindungsgemäße Reaktor **1** eine druckdicht abschließbare innere Hülle **2**,
in der inneren Hülle **2** einen Abscheidebereich **3** umfassend einen oder mehrere Wärmetauscher und Abscheider zur Erwärmung von komprimiertem wässrigen Vielkomponentengemisch auf bis zu 550 Grad Celsius und zur Abtrennung von Wertstoffen,
in der inneren Hülle **2** einen Aufheizbereich **4** zur Erwärmung des komprimierten wässrigen Vielkomponentengemisches nach Abtrennung von Wertstoffen auf 600 bis 700 Grad umfassend eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** mit der inneren Hülle **2** einen Ringspalt bildet,
wobei die Synthesegasleitung **11** in einem Teil des Verweilbereichs **5** oder im ganzen Verweilbereich **5** mit der inneren Hülle **2** einen Ringspalt bildet und der Ringspalt im Verweilbereich **5** zumindest teilweise einen Durchmesser von mindestens 150 mm hat, wobei die Synthesegasleitung **11** zur Einleitung von überkritischem Wasser, in dem Synthesegas gelöst ist, im Verweilbereich **5** mindestens eine Öffnung aufweist, die Synthesegasleitung **11** zur Erwärmung von komprimiertem wässrigen Vielkomponentengemisch vom Verweilbereich **5** durch den Aufheizbereich **4** führt, wobei die Synthesegasleitung **11** mit dem Wärmetauscher WT4 **10** mit Bypass-Ventil und dem Bypass verbunden ist.

In weiteren Ausführungsformen des erfindungsgemäßen Reaktors **1** führt die Synthesegasleitung **11** vom Wärmetauscher WT4 **10**, durch den Wärmetauscher WT1 **9**, sofern vorhanden durch den Wärmetauscher WT2 **12**, sofern vorhanden durch den Wärmetauscher WT3 **13**, zur Erwärmung von komprimiertem wässrigem Vielkomponentengemisch auf bis zu 550 Grad Celsius. In weiteren Ausführungsformen des erfindungsgemäßen Reaktors **1** ist die Synthesegasleitung **11** mit dem Wärmetauscher WT4 **10** verbunden, der Wärmetauscher WT4 **10** ist mit dem Wärmetauscher WT1 **9** verbunden, der Wärmetauscher WT1 **9** ist mit dem Wärmetauscher WT2 **12** verbunden, der Wärmetauscher WT2 **12** ist mit dem Wärmetauscher WT3 **13** verbunden zur Erwärmung von komprimiertem wässrigem Vielkomponentengemisch mit dem überkritischen Wasser, in dem Synthesegas gelöst ist. In weiteren Ausführungsformen des erfindungsgemäßen Reaktors **1** ist die Synthesegasleitung **11** mit dem Bypass und dem Wärmetauscher WT4 **10** verbunden, der Bypass und der Wärmetauscher WT4 **10** sind mit dem Wärmetauscher WT1 **9** verbunden, der Wärmetauscher WT1 **9** ist mit dem Wärmetauscher WT2 **12** verbunden, der Wärmetauscher WT2 **12** ist mit dem Wärmetauscher WT3 **13** verbunden zur Erwärmung von komprimiertem wässrigem Vielkomponentengemisch mit dem überkritischen Wasser, in dem Synthesegas gelöst ist.

Beispielsweise umfasst der erfindungsgemäße Reaktor **1** eine druckdicht abschließbare innere Hülle **2**,
in der inneren Hülle **2** einen Abscheidebereich **3** umfassend Wärmetauscher WT3 **13** und Abscheider A3 zur Erwärmung von komprimiertem wässrigen Vielkomponentengemisch auf bis zu 300 Grad Celsius und zur Abtrennung einer Wertstofffraktion WF3, Wärmetauscher WT2 **12** und Abscheider A2 zur Erwärmung von komprimiertem wässrigen Vielkomponentengemisch auf bis zu 400 Grad Celsius und zur Abtrennung einer Wertstofffraktion WF2, Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstoffen auf 600 bis 700 Grad Celsius umfassend eine Synthesegasleitung **11**, einen Bypass, einen Wärmetauscher WT4 **10** und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** mit der inneren Hülle **2** einen Ringspalt bildet,
wobei der Ringspalt im Aufheizbereich **4** einen Durchmesser von weniger als 10 mm hat, wobei der Ringspalt in der aufrechtstehenden Kolonne oberhalb des Bypass und des Wärmetauschers WT4 **10** angeordnet ist,
wobei die Synthesegasleitung **11** in einem Teil des Verweilbereichs **5** oder im ganzen Verweilbereich **5** mit der inneren Hülle **2** einen Ringspalt bildet und der Ringspalt im Verweilbereich **5** zumindest teilweise einen Durchmesser von mindestens 150 mm hat, wobei die Synthesegasleitung **11** zur Einleitung von überkritischem Wasser, in dem Synthesegas gelöst ist, im Verweilbereich **5** mindestens eine Öffnung aufweist,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere elektrische Heizelemente zur Erwärmung des komprimierten wässrigen Vielkomponentengemisches im Aufheizbereich **4** angeordnet sind,
wobei die Synthesegasleitung **11** zur Erwärmung von komprimiertem wässrigen Vielkomponentengemisch und zur Abkühlung von überkritischem Wasser, in dem Synthesegas gelöst ist, vom Verweilbereich **5** durch den Aufheizbereich **4** führt, wobei die Synthesegasleitung **11** mit dem Wärmetauscher WT4 **10** und dem Bypass verbunden ist.

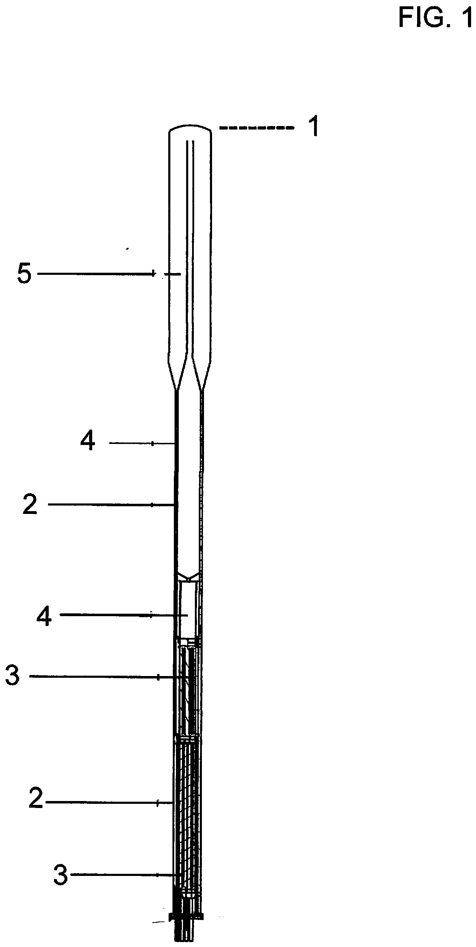

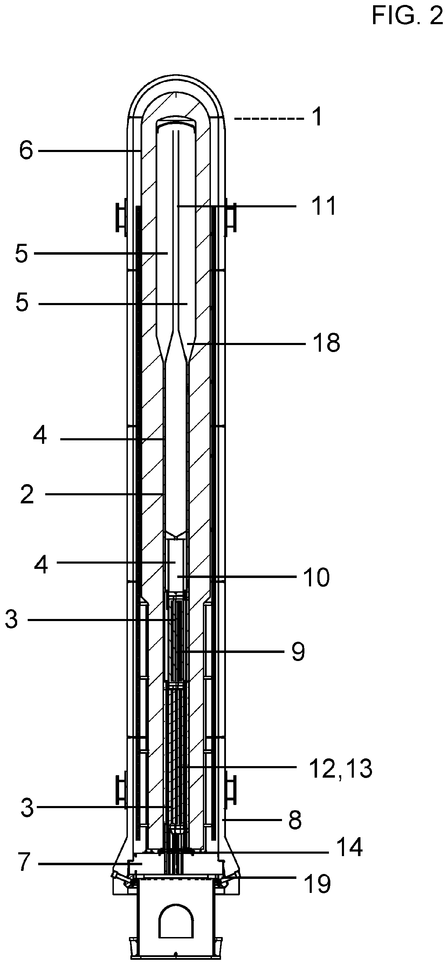

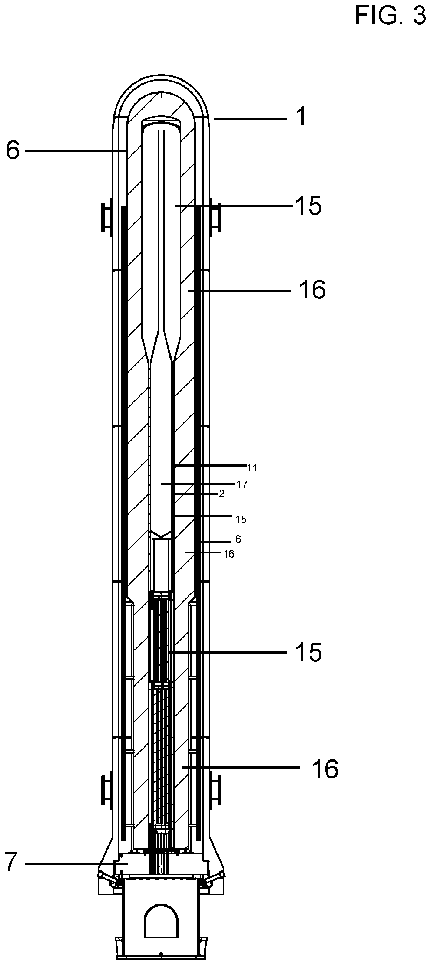

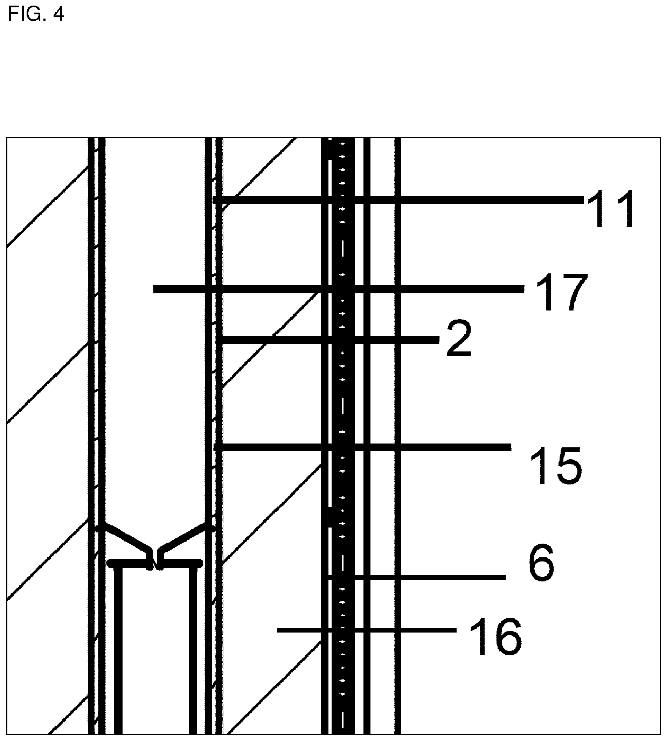

In besonders bevorzugten Ausführungsformen des erfindungsgemäßen Reaktors **1** sind Abscheidebereich **3**, Aufheizbereich **4** und Verweilbereich **5** in Form einer aufrechtstehenden Kolonne angeordnet. Die Bestandteile des Reaktors **1**, insbesondere Abscheidebereich **3**, Aufheizbereich **4**, Verweilbereich **5**, Synthesegasleitung **11**, Abscheider (A1, A2, A3) und Wärmetauscher (WT1, WT2, WT3, WT4, ggf. WT5) haben eine definierte Anordnung in der Kolonne - wie beispielhaft für einzelne Einbauten des Reaktors **1** beschrieben und in den Figuren 1 bis 4 dargestellt.

In bevorzugten Ausführungsformen des Reaktors **1** ist der Abscheidebereich **3** im unteren Teil der aufrechtstehenden Kolonne angeordnet, angrenzend an den Abscheidebereich **3** der Aufheizbereich **4**, angrenzend an den Aufheizbereich **4** der Verweilbereich **5** im oberen Teil der Kolonne in der druckdicht abschließbaren inneren Hülle **2**. In bevorzugten Ausführungsformen des Reaktors **1** sind im Abscheidebereich **3** Wärmetauscher WT3 **13** und Abscheider A3 unten im Abscheidebereich **3** der aufrechtstehenden Kolonne angeordnet, Wärmetauscher WT2 **12** und Abscheider A2 oberhalb oder neben Wärmetauscher WT3 **13** und Abscheider A3, Wärmetauscher WT1 **9** und Abscheider A1 oberhalb von Wärmetauscher WT2 **12** und Abscheider A2 oder oberhalb von Wärmetauscher WT2 **12** und Abscheider A2 und Wärmetauscher WT3 **13** und Abscheider A3. In bevorzugten Ausführungsformen des Reaktors **1** sind im Aufheizbereich **4** Wärmetauscher WT4 **10** und Bypass im unteren Teil des Aufheizbereichs **4** angeordnet, wobei der untere Teil des Aufheizbereichs **4** an den Abscheidebereich **3** angrenzt, der Rohrwärmetauscher WT5 oder die Synthesegasleitung **11** und der Ringspalt im oberen Teil und gegebenenfalls im mittleren Teil des Aufheizbereichs **4** angeordnet, wobei der obere Teil des Aufheizbereichs **4** an den Verweilbereich **5** angrenzt. In bevorzugten Ausführungsformen des Reaktors **1** sind Wärmetauscher WT3 **13**, Abscheider A3, Wärmetauscher WT2 **12**, Abscheider A2 in der aufrechtstehenden Kolonne in der unteren Ebene des Abscheidebereichs **3** nebeneinander angeordnet und oberhalb von den Wärmetauschern WT2 **12**, Abscheider A2, WT3 **13** und Abscheider A3 der Wärmetauscher WT1 **9** und Abscheider A1. Wärmetauscher WT1 **9** ist mit Wärmetauscher WT2 **12** verbunden, Wärmetauscher WT2 **12** ist mit Wärmetauscher WT3 **13** verbunden.

Die definierte Anordnung der Einbauten in der Kolonne ermöglicht aus dem komprimierten wässrigen Vielkomponentengemisch Wertstoffe beispielsweise Feststoffe, Sand, Metalle, Metallsalze, Nährstoffe wie Phosphat und Ammonium durch verschiedene thermische Verfahren abzutrennen. Hierzu werden physikalische Eigenschaften und Gleichgewichtszustände zwischen unterschiedlichen Phasen, in denen sich das komprimierte wässrige Vielkomponentengemisch bzw. Bestandteile des komprimierten wässrigen Vielkomponentengemisches in unterschiedlichen Bereichen der Kolonne befinden, genutzt. Beispielsweise werden in dem erfindungsgemäßen Reaktor **1** an verschiedenen Stellen der Kolonne zwei Phasen im Gegenstrom direkt miteinander in Kontakt gebracht oder eine flüssige Phase über eine feste Phase bewegt. Beispielsweise herrschen bei bestimmungsgemäßem Gebrauch in verschiedenen Bereichen der Kolonne unterschiedliche Temperaturen und Strömungsgeschwindigkeiten. Bei bestimmungsgemäßem Gebrauch des Reaktors **1** unterscheidet sich in verschiedenen Bereichen der Kolonne die Art der Strömung, beispielsweise ist im Abscheidebereich **3** eine turbulente Strömung zur guten Durchmischung und schnellen Aufheizung erwünscht. Die Form des erfindungsgemäßen Reaktors **1** als schlanke Säule und die Anordnung der Einbauten dienen dem erhöhten Stoff- und Energieaustausch und der Vermeidung einer Rückvermischung der abgetrennten Wertstoffe und / oder des überkritischen Wassers, in dem Synthesegas gelöst ist, mit komprimiertem wässrigem Vielkomponentengemisch. Eine bevorzugte Ausführungsform des erfindungsgemäßen Reaktors **1** mit Abscheidebereich **3**, Aufheizbereich **4** und Verweilbereich **5** als aufrechtstehende Kolonne ist in den Figuren 1 bis 4 dargestellt.

In einer bevorzugten Ausführungsform des Reaktors **1** hat die druckdicht abschließbare innere Hülle **2** die Form einer aufrechtstehenden Kolonne. Bei einer Anordnung als aufrechtstehende Kolonne, ist der Verweilbereich **5** vorzugsweise im oberen Teil der aufrechtstehenden Kolonne angeordnet, d.h. im oberen Teil der druckdicht abschließbaren inneren Hülle **2**, mit dem Aufheizbereich **4** im mittleren Teil der Kolonne und dem Abscheidebereich **3** im unteren Teil der Kolonne. In einer bevorzugten Ausführungsform sind Wärmetauscher WT3 **13**, Abscheider A3 und Wärmetauscher WT2 **13**, Abscheider A2 im unteren Teil der Kolonne nebeneinander angeordnet, d.h. auf der gleichen Ebene in der Kolonne, darüber in Richtung auf den mittleren Teil der Kolonne sind Wärmetauscher WT1 **9**, Abscheider A1 angeordnet. In einer anderen bevorzugten Ausführungsform sind Wärmetauscher WT3 **13**, Abscheider A3 im unteren Teil der Kolonne angeordnet, Wärmetauscher WT2 **12**, Abscheider A2 sind darüber in Richtung auf den mittleren Teil der Kolonne angeordnet, darüber in Richtung auf den mittleren Teil der Kolonne sind Wärmetauscher WT1 **9**, Abscheider A1 angeordnet.

In alternativen Ausführungsformen des Reaktors **1** sind Wärmetauscher WT1 **9** und Abscheider A1 entweder übereinander oder nebeneinander in der inneren Hülle **2** angeordnet. In besonders bevorzugten Ausführungsformen des Reaktors **1** ist Abscheider A1 in Wärmetauscher WT1 **9** integriert (Wärmetauscher WT1 **9** mit integriertem Abscheider A1). In alternativen Ausführungsformen des Reaktors **1** sind Wärmetauscher WT2 **12** und Abscheider A2 entweder übereinander oder nebeneinander angeordnet. In besonders bevorzugten Ausführungsformen des Reaktors **1** ist Abscheider A2 in Wärmetauscher WT2 **12** integriert (Wärmetauscher WT2 **12** mit integriertem Abscheider A2). In alternativen Ausführungsformen des Reaktors **1** sind Wärmetauscher WT3 **13** und Abscheider A3 entweder übereinander oder nebeneinander angeordnet. In besonders bevorzugten Ausführungsformen des Reaktors **1** ist Abscheider A3 in Wärmetauscher WT3 **13** integriert (Wärmetauscher WT3 **13** mit integriertem Abscheider A3). Eine bevorzugte Ausführungsform des Reaktors **1** umfasst Wärmetauscher WT1 **9** mit integriertem Abscheider A1, sofern vorhanden Wärmetauscher WT2 **12** mit integriertem Abscheider A2, sofern vorhanden Wärmetauscher WT3 **13** mit integriertem Abscheider A3.

Als Wärmetauscher WT1 **9**, WT2 **12**, WT3 **13**, WT4 **10** können die bekannten Wärmetauscher eingesetzt werden, z.B. Plattenwärmetauscher, Rohrbündelwärmetauscher. Die Anmessungen und Form des Abscheidebereichs **3** und des Aufwärmbereichs **4** müssen gegebenenfalls angepasst werden. Ein erfindungsgemäßer Reaktor **1** mit Rohrbündelwärmetauschern WT1 **9**, WT2 **12**, WT3 **13**, WT4 **10** zur Erwärmung von komprimiertem wässrigen Vielkomponentengemisch auf bis zu 600 oder bis zu 700 Grad Celsius beispielsweise erfordert eine Länge von 30 bis 40 m im Abscheide- und Aufheizbereich. Bei einem erfindungsgemäßen Reaktor **1** mit Plattenwärmetauschern WT1 **9**, WT2 **12**, WT3 **13**, WT4 **10** zur Erwärmung von komprimiertem wässrigen Vielkomponentengemisch auf bis zu 600 oder bis zu 700 Grad Celsius beispielsweise besteht die Gefahr der Verstopfung bei hohen Strömungsgeschwindigkeiten.

In einer besonders bevorzugten Ausführungsform des Reaktor **1** werden als Heizelemente Pillow-Plate Wärmetauscher eingesetzt. In einem erfindungsgemäßen Reaktor **1** mit Pillow-Plate Wärmetauschern WT1 **9**, WT2 **12**, WT3 **13**, WT4 **10** können die Wärmetauscher kompakt angeordnet werden. Ein erfindungsgemäßer Reaktor **1** mit Pillow-Plate Wärmetauschern WT1 **9**, WT2 **12**, WT3 **13**, gegebenenfalls Wärmetauscher WT4 **10** zur Erwärmung von komprimiertem wässrigen Vielkomponentengemisch auf bis zu 600 oder bis zu 700 Grad Celsius beispielsweise erfordert nur eine Länge von 5 bis 9 m im Abscheidebereich **3** und Aufheizbereich **4**. Pillow-Plate Wärmetauscher haben eine charakteristische Kissenstruktur. Pillow-Plate Wärmetauscher sind für die Erwärmung von komprimiertem wässrigen Vielkomponentengemisch wie Biomasse, Schmutzwasser und Klärschlamm besonders geeignet. Aufgrund der gewölbten Wände der Pillow-Plate Wärmetauscher bilden sich auch bei niedrigen Strömungsgeschwindigkeiten des komprimierten wässrigen Vielkomponentengemisch viele Turbulenzen, so dass das komprimierte wässrige Vielkomponentengemisch gleichmäßig und schnell beim Durchströmen eines Pillow-Plate Wärmetauschers aufgeheizt wird. Pillow-Plate Wärmetauscher weisen zudem eine hohe mechanische Stabilität auf, so dass die Gefahr mechanischer Beschädigungen oder Deformation und ein damit verbundener Stillstand oder eine notwendige Reparatur des Reaktors **1** reduziert sind.

In einer besonders bevorzugten Ausführungsform des Reaktors **1** ist Wärmetauscher WT1 **9** ein Pillow-Plate Wärmetauscher. In einer besonders bevorzugte Ausführungsform des Reaktors **1** ist Wärmetauscher WT1 **9** ein Pillow-Plate Wärmetauscher und Wärmetauscher WT4 **10** ein Pillow-Plate Wärmetauscher. In einer besonders bevorzugten Ausführungsform des erfindungsgemäßen Reaktors **1** ist Wärmetauscher WT1 **9** ein Pillow-Plate Wärmetauscher und Wärmetauscher WT2 **12** ein Pillow-Plate Wärmetauscher. In einer besonders bevorzugten Ausführungsform des erfindungsgemäßen Reaktors **1** ist Wärmetauscher WT1 **9** ein Pillow-Plate Wärmetauscher, Wärmetauscher WT2 **12** ein Pillow-Plate Wärmetauscher, Wärmetauscher WT4 **10** ein Pillow-Plate Wärmetauscher. In einer besonders bevorzugten Ausführungsform des erfindungsgemäßen Reaktors **1** ist Wärmetauscher WT1 **9** ein Pillow-Plate Wärmetauscher, Wärmetauscher WT2 **12** ein Pillow-Plate Wärmetauscher, Wärmetauscher WT3 **13** ein Pillow-Plate Wärmetauscher, Wärmetauscher WT4 **10** ein Pillow-Plate Wärmetauscher. In besonders bevorzugten Ausführungsformen umfasst der Reaktor **1** Pillow-Plate Wärmetauscher mit integriertem Abscheider.

In besonders bevorzugten Ausführungsformen des Reaktors **1** sind die Abscheider A1, A2 und A3 übereinander angeordnet und die Wärmetauscher um 90 Grad gegeneinander verdreht. In bevorzugten Ausführungsformen umfasst der Reaktor **1** Wärmetauscher mit integriertem Abscheider WTA1, WTA2 und WTA3, wobei der Wärmetauscher mit integriertem Abscheider WTA1 über den Wärmetauschern mit integriertem Abscheider WTA2 und WTA3 angeordnet ist und die Wärmetauscher mit integriertem Abscheider um 90 Grad gegeneinander verdreht sind. In bevorzugten Ausführungsformen sind die Wärmetauscher Pillow-Plate Wärmetauscher und die Abscheider in die Pillow-Plate Wärmetauscher integriert, wobei die Abscheider übereinander angeordnet und die Pillow-Plate Wärmetauscher mit integriertem Abscheider um 90 Grad gegeneinander verdreht sind.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT3 **13** mit integriertem Abscheider A3 (WTA3) zur Erwärmung von komprimiertem wässrigen Vielkomponentengemisch auf bis zu 300 Grad Celsius und zur Abtrennung einer Wertstofffraktion WF1, Wärmetauscher WT2 **12** mit integriertem Abscheider A2 (WTA2) zur Erwärmung von komprimiertem wässrigen Vielkomponentengemisch auf bis zu 400 Grad Celsius und zur Abtrennung einer Wertstofffraktion WF2, Wärmetauscher WT1 **9** mit integriertem Abscheider A1 (WTA1) zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstoffen auf 600 bis 700 Grad umfassend eine Synthesegasleitung **11**, einen Wärmetauscher WT4 **10**, einen Bypass und ein Bypass-Ventil,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die Synthesegasleitung **11** in einem Teil des Aufheizbereichs **4** oder im ganzen Aufheizbereich **4** mit der inneren Hülle **2** einen Ringspalt bildet und der Ringspalt im Aufheizbereich **4** zumindest teilweise einen Durchmesser von weniger als 20 mm hat, wobei die Synthesegasleitung **11** im Verweilbereich **5** mindestens eine Öffnung aufweist, und die Synthesegasleitung **11** zur Erwärmung von komprimiertem wässrigen Vielkomponentengemisch vom Verweilbereich **5** durch den Aufheizbereich **4** führt, wobei die Synthesegasleitung **11** mit dem Wärmetauscher WT4 **10** und dem Bypass verbunden ist.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Pillow-Plate Wärmetauscher WT3 **13** mit integriertem Abscheider A3 zur Erwärmung von komprimiertem wässrigen Vielkomponentengemisch auf bis zu 300 Grad Celsius und zur Abtrennung einer Wertstofffraktion WF1, Pillow-Plate Wärmetauscher WT2 **12** mit integriertem Abscheider A2 zur Erwärmung von komprimiertem wässrigen Vielkomponentengemisch auf bis zu 400 Grad Celsius und zur Abtrennung einer Wertstofffraktion WF2, Pillow-Plate Wärmetauscher WT1 **9** mit integriertem Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstofffraktion WF3, Wertstofffraktion WF2, Wertstofffraktion WF1 auf 600 bis 700 Grad Celsius umfassend einen Pillow-Plate Wärmetauscher WT4 **10**, ein Bypass-Ventil, einen Bypass, eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend eine Synthesegasleitung **11**,
wobei Abscheidebereich **3**, Aufheizbereich **4** und Verweilbereich **5** als Kolonne angeordnet sind,
eine äußere Hülle **6**, die die innere Hülle **2** umgibt,
zwischen innerer Hülle **2** und äußerer Hülle **6** einen zweiten Druckraum **16**,
umfassend im zweiten Druckraum **16** einen Teil in dem ein oder mehrere elektrische Heizelemente zur Erwärmung des komprimierten wässrigen Vielkomponentengemisches im Aufheizbereich **4** angeordnet sind,
wobei die Synthesegasleitung **11** in einem Teil des Aufheizbereichs **4** oder im ganzen Aufheizbereich **4** mit der inneren Hülle **2** einen Ringspalt bildet und der Ringspalt zumindest teilweise einen Durchmesser von 4 bis 10 mm hat,
wobei die Synthesegasleitung **11** in einem Teil des Verweilbereichs **5** oder im ganzen Verweilbereich **5** mit der inneren Hülle **2** einen Ringspalt bildet und der Ringspalt im Verweilbereich **5** zumindest teilweise einen Durchmesser von mindestens 150 mm hat, wobei die Synthesegasleitung **11** zur Einleitung von überkritischem Wasser, in dem Synthesegas gelöst ist, im Verweilbereich **5** mindestens eine Öffnung aufweist,
und die Synthesegasleitung **11** zur Erwärmung von komprimiertem wässrigen Vielkomponentengemisch und zur Abkühlung von überkritischem Wasser, in dem Synthesegas gelöst ist, vom Verweilbereich **5** durch den Aufheizbereich **4** führt, wobei die Synthesegasleitung **11** mit dem Pillow-Plate Wärmetauscher WT4 **10** und dem Bypass verbunden ist, der Pillow-Plate Wärmetauscher WT4 **10** und der Bypass im Abscheidebereich **3** mit dem Pillow-Plate Wärmetauscher WT1 **9** mit integriertem Abscheider A1 verbunden sind, der Pillow-Plate Wärmetauscher WT1 **9** mit integriertem Abscheider A1 mit dem Pillow-Plate Wärmetauscher WT2 **12** mit integriertem Abscheider A verbunden ist, der Pillow-Plate Wärmetauscher WT2 **12** mit integriertem Abscheider A2 mit dem Pillow-Plate Wärmetauscher WT3 **13** mit integriertem Abscheider A3 verbunden ist,
wobei im Abscheidebereich **3** der Abscheider des Pillow-Plate Wärmetauschers WT1 **9** mit integriertem Abscheider A1, der Abscheider des Pillow-Plate Wärmetauschers WT2 **12** mit integriertem Abscheider A2 und der Abscheider A3 des Pillow-Plate Wärmetauschers WT3 **13** mit integriertem Abscheider A3 übereinander angeordnet sind und die Pillow-Plate Wärmetauscher WT2 **12** mit integriertem Abscheider A2 gegenüber dem Pillow-Plate Wärmetauscher WT3 **13** mit integriertem Abscheider A3 um 90 Grad gedreht ist und Pillow-Plate Wärmetauscher WT1 **9** mit integriertem Abscheider A1 gegenüber Pillow-Plate Wärmetauscher WT2 **12** mit integriertem Abscheider A2 um 90 Grad gedreht sind,
und wobei das überkritische Wasser, in dem Synthesegas gelöst ist, in der Synthesegasleitung **11**, in dem Pillow-Plate Abscheider WT4 **10**, in dem Pillow-Plate Wärmetauscher WT1 **9** mit integriertem Abscheider A1, in dem Pillow-Plate Wärmetauscher WT2 **12** mit integriertem Abscheider A2, in dem Pillow-Plate Wärmetauscher WT3 **13** mit integriertem Abscheider A3 von dem komprimierten wässrigen Vielkomponentengemisch getrennt ist.

In besonders bevorzugten Ausführungsformen besteht die druckdicht abschließbare innere Hülle **2** des Reaktors **1** aus Nickelbasislegierung oder Superlegierungen auf Nickelbasis. In alternativen bevorzugten Ausführungsformen umfasst die druckdicht abschließbare innere Hülle **2** des Reaktors **1** Nickelbasislegierung oder mindestens eine Superlegierung auf Nickelbasis. In besonders bevorzugten Ausführungsformen besteht der Werkstoff der Einbauten, z.B. die Wärmetauscher WT1 **9**, WT2 **12**, WT3 **13**, WT4 **9 10** und / oder die Abscheider, z.B. Abscheider A1, A2, A3 und / oder die Wärmetauscher mit integriertem Abscheider, z.B. Wärmetauscher WT1 **9** mit integriertem Abscheider A1, Wärmetauscher WT2 **12** mit integriertem Abscheider A2, Wärmetauscher WT3 **13** mit integriertem Abscheider A3 und / oder Pillow-Plate Wärmetauscher z.B. Pillow-Plate Wärmetauscher mit integriertem Abscheider aus Nickelbasislegierung. In alternativen bevorzugten Ausführungsformen umfasst der Werkstoff der Einbauten Nickelbasislegierung oder Superlegierungen auf Nickelbasis, z.B. umfassen die Wärmetauscher WT1 **9**, WT2 **12**, WT3 **13**, WT4 **9** im Reaktor 1 Nickelbasislegierung oder Superlegierungen auf Nickelbasis. In alternativen bevorzugten Ausführungsformen umfasst der Werkstoff der Abscheider, z.B. Abscheider A1, A2, A3 und / oder der Werkstoff der Wärmetauscher mit integriertem Abscheider, z.B. Wärmetauscher WT1 **9** mit integriertem Abscheider A1, Wärmetauscher WT2 **12** mit integriertem Abscheider A2, Wärmetauscher WT3 **13** mit integriertem Abscheider A3 Nickelbasislegierung oder Superlegierungen auf Nickelbasis. In alternativen bevorzugten Ausführungsformen umfasst der Werkstoff der Pillow-Plate Wärmetauscher z.B. der Pillow-Plate Wärmetauscher mit integriertem Abscheider Nickelbasislegierung oder Superlegierungen auf Nickelbasis. In besonders bevorzugten Ausführungsformen umfasst der Reaktor **1** Pillow-Plate Wärmetauscher und Pillow-Plate Wärmetauscher mit integriertem Abscheider, z.B. Pillow-Plate Wärmetauscher WT1, WT2, WT3 mit integriertem Abscheider A1, A2, A3 und Wärmetauscher WT4 als Heizelemente, wobei alle Wärmetauscher und Abscheider aus Nickelbasislegierung bestehen. In besonders bevorzugten Ausführungsformen umfasst der Reaktor **1** Pillow-Plate Wärmetauscher WT1, WT2, WT3 mit integriertem Abscheider A1, A2, A3 und Wärmetauscher WT4 als Heizelemente, wobei alle Wärmetauscher und Abscheider Nickelbasislegierung umfassen.

Nickelbasislegierungen sind Werkstoffe, deren Hauptbestandteil Nickel ist und die mit mindestens einem anderen chemischen Element meist mittels eines Schmelzverfahrens erzeugt werden. Nickelbasislegierungen verfügen über eine gute Korrosions- und/oder Hochtemperaturbeständigkeit (Kriechfestigkeit). Nickelbasislegierungen sind beispielsweise Nickel-Kupfer-, Nickel-Eisen-, Nickel-Eisen-Chrom-, Nickel-Chrom-, Nickel-Molybdän-Chrom-, Nickel-Chrom-Kobalt- und andere Mehrstoff-Legierungen. Die meisten Nickelbasislegierungen sind nach internationalen Normen klassifiziert und dem Fachmann bekannt. In bestimmten Ausführungsformen des Reaktors **1** bestehen die druckdicht abschließbare innere Hülle **2**, Wärmetauscher und Abscheider aus Nickelbasislegierung. In bestimmten Ausführungsformen des Reaktors **1** bestehen die druckdicht abschließbare innere Hülle **2**, Wärmetauscher und Abscheider aus Nickelbasislegierung, wobei die druckdicht abschließbare innere Hülle **2** und Einbauten vollständig oder teilweise weitere Schichten aus anderen Werkstoffen oder Materialien umfassen können.

In dem erfindungsgemäßen Reaktor **1** haben die Einbauten die in der in der inneren Hülle **2** des Reaktors **1** angeordnet sind, also beispielsweise Wärmetauscher WT1 **9**, WT2 **12**, WT3 **13**, WT4 **10**, Abscheider A1, A2, A3, insbesondere Wärmetauscher mit integriertem Abscheider, besonders bevorzugt Pillow-Plate Wärmetauscher und Pillow-Plate Wärmetauscher mit integriertem Abscheider, Synthesegasleitung **11** eine Wandstärke von weniger als 50 mm, beispielsweise 30 mm, beispielsweise 20 mm oder 15 mm, vorzugsweise 10 mm oder weniger, beispielsweise 5 mm. In besonders bevorzugten Ausführungsformen des Reaktors **1** bestehen die Einbauten aus dünnem, vorzugsweise extrem dünnem Blech aus Nickelbasislegierung. In einigen Ausführungsformen des Reaktors **1** beispielsweise hat das Blech der Einbauten eine Wandstärke von 10 mm oder weniger, 5 mm oder weniger, vorzugsweise 1 bis 3 mm, weniger als 2 mm, besonders bevorzugt etwa 1 mm, z.B. 1,5 bis 0,75 mm. Durch die extrem dünnen Wandstärken der Einbauten, insbesondere in den Wärmetauschen und der Synthesegasleitung **11** kommt es zu einer sehr guten Wärmeübertragung zwischen komprimiertem wässrigem Vielkomponentengemisch und überkritischem Wasser, in dem Synthesegas gelöst ist, im Abscheide- und Aufheizbereich.

In dem erfindungsgemäßen Reaktor **1** hat die druckdicht abschließbare innere Hülle **2** des Reaktors **1** eine Wandstärke von weniger als 50 mm, beispielsweise 30 mm oder 20 mm oder weniger, vorzugsweise 10 mm oder weniger, beispielsweise 9 mm, 8 mm, 7 mm, 6 mm, 5 mm, 4 mm, 3 mm oder weniger. In besonders bevorzugten Ausführungsformen besteht die druckdicht abschließbare innere Hülle **2** des Reaktors **1** aus dünnem, vorzugsweise extrem dünnem Blech aus Nickelbasislegierung, beispielsweise hat das Blech der inneren Hülle **2** eine Wandstärke von 10 mm oder weniger, 5 mm oder weniger, vorzugsweise 1 bis 3 mm, weniger als 2 mm, besonders bevorzugt etwa 1 mm, z.B. 1,5 bis 0,75 mm. Durch die extrem dünne Wandstärke der inneren Hülle **2** wird weniger Nickelbasislegierung für die Herstellung benötigt und es ist kommt zu einer sehr guten Wärmeübertragung zwischen den Heizelementen, die im zweiten Druckraum **16** angeordnet sind und dem komprimierten wässrigen Vielkomponentengemisch im Aufheizbereich **4** im Inneren der inneren Hülle **2**. Ein Nachteil des Werkstoffs Nickelbasislegierung ist, dass Nickelbasislegierungen im Temperaturbereich über 550 Grad Celsius, insbesondere bei 600 bis 700 Grad Celsius nur wenig druckbeständig sind. Der Druckdifferenz zwischen dem im Inneren der inneren Hülle **2** herrschenden Druck des komprimierten wässrigen Vielkomponentengemisches und Normaldruck außerhalb der inneren Hülle **2**, würde die innere Hülle **2** bei einer dünnwandigen Ausführung der inneren Hülle **2** nicht standhalten.

Um keine oder nur eine sehr geringe Druckdifferenz zwischen dem Inneren der druckdicht abschließbaren inneren Hülle **2** (ersten Druckraum **15**) und außerhalb der inneren Hülle **2** zu haben, umfasst der Reaktor **1** in bevorzugten Ausführungsformen eine druckdicht abschließbare äußere Hülle **6**, die die druckdicht abschließbare innere Hülle **2** umgibt und einen zweiten Druckraum **16** zwischen der inneren Hülle **2** und der äußeren Hülle **6** umschließt. Der Druck im zweiten Druckraum **16** kann beispielsweise durch ein Gas oder eine Flüssigkeit, bei bestimmungsgemäßem Betrieb des Reaktors **1** komprimiert und an den Druck im Inneren der inneren Hülle **2** angepasst werden. In bevorzugten Ausführungsformen umfasst der Reaktor **1** zwischen der inneren Hülle **2** und der äußeren Hülle **6** einen zweiten Druckraum **16**, wobei der zweite Druckraum **16** ein Gas, vorzugsweise ein inertes Gas (Inertgas) oder eine Mischung inerter Gase umfasst. In alternativen Ausführungsformen umfasst der Reaktor **1** im zweiten Druckraum **16** eine auf komprimierbare Flüssigkeit.

Inertgas (inertes Gas) ist ein Gas, das unter den betreffenden Reaktionsbedingungen sehr reaktionsträge (inert) ist, bzw. sich nicht oder nur an wenigen chemischen Reaktionen beteiligen. Vorliegend sind inerte Gase solche Gase, die bei Drücken über 20 MPa, vorzugsweise bei Drücken von 25 bis 35 MPa und Temperaturen von 200 bis 700 Grad Celsius sehr reaktionsträge sind und sich nicht oder nur sehr wenig an chemischen Reaktionen beteiligen. Beispielsweise können als inertes Gas im zweiten Druckraum **16** elementare Gase wie Stickstoff, Edelgase wie Helium, Neon, Argon, Krypton, Xenon, und gasförmige Molekülverbindungen wie Schwefelhexafluorid und Kohlendioxid verwendet werden. Ebenfalls können Mischungen der genannten Gase verwendet werden. Dem Fachmann sind entsprechende inerte Gase und Gasmischungen bekannt.

In bevorzugten Ausführungsformen des Reaktors 1 wird als inertes Gas im zweiten Druckraum **16** Stickstoff verwendet. In bevorzugten Ausführungsformen wird als Gas im zweiten Druckraum **16** eine Mischung von Stickstoff mit Wasserstoff, vorzugsweise eine Mischung mit ≤ 5 Vol. % Wasserstoff umfasst. Mischungen von Stickstoff mit ≤ 5 Vol. % Wasserstoff sind nicht brennbar. Eine Mischung von Stickstoff mit ≤ 5 Vol. % Wasserstoff kann weitere gasförmige Komponenten umfassen, wobei der Anteil an Stickstoff mindestens 50 Volumenprozent beträgt. Eine Mischung von Stickstoff mit ≤ 5 Vol. % Wasserstoff als Gas im zweiten Druckraum **16** verhindert die Verzunderung. Unter Verzunderung versteht man die bei höheren Temperaturen auftretende Bildung dickschichtiger Oxydationsprodukte an der Oberfläche metallischer Werkstoffe als Folge von Metall-Sauerstoff-Reaktionen.

In bevorzugten Ausführungsformen des erfindungsgemäßen Reaktors **1** ist der Druck des Gases im zweiten Druckraum **16** an den Druck im Inneren der inneren Hülle **2** angepasst. In besonders bevorzugten Ausführungsformen des Reaktors **1**, wobei das Blech der inneren Hülle **2** aus Nickelbasislegierung mit einer Wandstärke von weniger als 10 mm, vorzugsweise weniger als 5 mm, besonders bevorzugt weniger als 2 mm Dicke aufweist, beträgt bei bestimmungsgemäßem Betrieb des Reaktors **1** die Druckdifferenz zwischen dem ersten Druckraum **15** (Druck im Inneren der inneren Hülle **2**) und dem zweiten Druckraum **16** (Druck im Raum zwischen der inneren Hülle **2** und der äußeren Hülle **6**) +/- 5 bar, vorzugsweise ist dabei der Druck im ersten Druckraum **15** größer als im zweiten Druckraum **16**. Beispielsweise beträgt der Druck im Inneren der druckdicht abschließbaren inneren Hülle **2** 27,3 MPa und der Druck im zweiten Druckraum **16** 27 MPa. Dadurch wird eine Druckdifferenz zwischen dem Inneren der inneren Hülle **2** und dem zweiten Druckraum **16** vermieden. Die innere Hülle **2** aus Nickelbasislegierung mit einer Wandstärke von weniger als 10 mm, vorzugsweise weniger als 5 mm, besonders bevorzugt weniger als 2 mm Dicke ist dadurch keiner oder nur einer geringen Druckdifferenz ausgesetzt.

In den besonders bevorzugten Ausführungsformen des Reaktors **1**, wobei das Blech der inneren Hülle **2** aus Nickelbasislegierung besteht und eine Wandstärke von weniger als 10 mm, vorzugsweise weniger als 5 mm, besonders bevorzugt weniger als 2 mm Dicke aufweist, beträgt bei bestimmungsgemäßem Betrieb des Reaktors **1** die Druckdifferenz zwischen dem ersten Druckraum **15** (Druck im Inneren der inneren Hülle **2**) und dem dritten Druckraum (Druck im Inneren der Wärmetauscher und der Synthesegasleitung **11**) +/- 2 bar, vorzugsweise +/- 1 bar oder weniger, besonders bevorzugt +/- 0,5 bar, +/-3 bar, +/- 0,1 bar oder weniger. Die Einbauten aus Nickelbasislegierung mit einer Wandstärke von weniger als 10 mm, vorzugsweise weniger als 5 mm, besonders bevorzugt weniger als 2 mm Dicke sind dadurch keiner oder nur einer sehr geringen Druckdifferenz ausgesetzt.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1 aus dem komprimierten wässrigen Vielkomponentengemisch,
in der inneren Hülle **2** einen Aufheizbereich **4** zur Erwärmung des komprimierten wässrigen Vielkomponentengemisches nach Abtrennung der Wertstofffraktion WF1 auf 600 bis 700 Grad umfassend eine Synthesegasleitung **11**, einen Bypass, einen Wärmetausche WT4,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als aufrechtstehende Kolonne angeordnet sind,
wobei die innere Hülle **2**, Wärmetauscher WT1 **9**, Wärmetauscher WT4 **10**, Abscheider A1 und Synthesegasleitung **11** Nickelbasislegierung umfassen oder aus Nickelbasislegierung bestehen und eine Wandstärke von 500 mm oder weniger, vorzugsweise 200 mm oder weniger aufweisen.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1 aus dem komprimierten wässrigen Vielkomponentengemisch,
in der inneren Hülle **2** einen Aufheizbereich **4** zur Erwärmung des komprimierten wässrigen Vielkomponentengemisches nach Abtrennung von Wertstoffen auf 600 bis 700 Grad umfassend eine Synthesegasleitung **11**, einen Bypass, einen Wärmetauscher WT4, in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
eine druckdicht abschließbare äußere Hülle **6**, die die innere Hülle **2** umgibt,
zwischen innerer Hülle und äußerer Hülle einen zweiten Druckraum **16**,
wobei Abscheidebereich **3**, Aufheizbereich **4** und Verweilbereich **5** als aufrechtstehende Kolonne angeordnet sind,
wobei die innere Hülle **2**, Wärmetauscher WT1 **9**, Wärmetauscher WT4 **10**, Abscheider A1 und Synthesegasleitung **11** Nickelbasislegierung umfassen oder aus Nickelbasislegierung bestehen und eine Wandstärke von 10 mm oder weniger, vorzugsweise 5 mm oder weniger aufweisen,
der zweite Druckraum **16** ein komprimierbares Inertgas oder eine komprimierbare Flüssigkeit umfasst.

In weiteren Ausführungsformen umfasst der erfindungsgemäße Reaktor **1** eine druckdicht abschließbare innere Hülle **2**,
in der inneren Hülle **2** einen Abscheidebereich **3** umfassend Pillow-Plate Wärmetauscher WT3 **13** mit integriertem Abscheider A3 zur Erwärmung von komprimiertem wässrigen Vielkomponentengemisch auf bis zu 300 Grad Celsius und zur Abtrennung einer Wertstofffraktion WF1, Pillow-Plate Wärmetauscher WT2 **12** mit integriertem Abscheider A2 zur Erwärmung von komprimiertem wässrigen Vielkomponentengemisch auf bis zu 400 Grad Celsius und zur Abtrennung einer Wertstofffraktion WF2, Pillow-Plate Wärmetauscher WT1 **9** mit integriertem Abscheider A1 zur Erwärmung von komprimiertem wässrigen Vielkomponentengemisch auf bis zu 550 Grad Celsius und zur Abtrennung einer Wertstofffraktion WF1,
in der inneren Hülle **2** einen Aufheizbereich **4** zur Erwärmung des komprimierten wässrigen Vielkomponentengemisches nach Abtrennung von Wertstofffraktion WF3, Wertstofffraktion WF2, Wertstofffraktion WF1 auf 600 bis 700 Grad Celsius umfassend
einen Pillow-Plate Wärmetauscher WT4 **10**, ein Bypass-Ventil, einen Bypass, eine Synthesegasleitung **11**,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius umfassend die Synthesegasleitung **11**,
wobei Abscheidebereich **3**, Aufheizbereich **4** und Verweilbereich **5** als Kolonne angeordnet sind,
eine druckdicht abschließbare äußere Hülle **6**, die die innere Hülle **2** umgibt,
zwischen innerer Hülle **2** und äußerer Hülle **6** einen zweiten Druckraum **16**,
umfassend im zweiten Druckraum **16** ein komprimierbares Inertgas oder eine komprimierbare Flüssigkeit und ein oder mehrere elektrische Heizelemente zur Erwärmung des komprimierten wässrigen Vielkomponentengemisches im Aufheizbereich **4**,
wobei die Synthesegasleitung **11** in einem Teil des Aufheizbereichs **4** oder im ganzen Aufheizbereich **4** mit der inneren Hülle **2** einen Ringspalt bildet und der Ringspalt zumindest teilweise einen Durchmesser von 4 bis 10 mm hat,
wobei die Synthesegasleitung **11** in einem Teil des Verweilbereichs **5** oder im ganzen Verweilbereich **5** mit der inneren Hülle **2** einen Ringspalt bildet und der Ringspalt im Verweilbereich **5** zumindest teilweise einen Durchmesser von mindestens 150 mm hat, wobei die Synthesegasleitung **11** zur Einleitung von überkritischem Wasser, in dem Synthesegas gelöst ist, im Verweilbereich **5** mindestens eine Öffnung aufweist.

Für die Einstellung des Drucks des Inertgases oder der komprimierbaren Flüssigkeit im zweiten Druckraum **16** sind dem Fachmann verschiedene technische Möglichkeiten bekannt.

Durch die Anpassung des Drucks im zweiten Druckraum **16** an den Druck im ersten Druckraum **15** (Druck im Inneren der inneren Hülle **2**) und/oder an den dritten Druckraum **17** (Druck im Inneren der Wärmetauscher und der Synthesegasleitung **11**) wird die Druckbelastung der inneren Hülle **2** und die Druckbelastung der Einbauten minimiert bzw. ausgeschaltet. Dadurch ist der Werkstoff Nickelbasislegierung zwar im Verweil- und Aufheizbereich **4** hohen Temperaturen ausgesetzt, aber keiner oder nur einer geringen Druckbelastung. Dadurch können für die innere Hülle **2** und die Einbauten hochwertige Werkstoffe wie Nickelbasislegierung die eine hohe Temperatur- und Korrosionsbeständigkeit, aber nur eine geringe Druckbeständigkeit aufweisen sogar mit dünnen Wandstärke verwendet werden. Da temperatur- und korrosionsbeständige Werkstoffe wie Nickelbasislegierungen sehr teuer sind, reduzieren diese Ausführungsformen des Reaktors **1** die Materialkosten für die Herstellung des Reaktors **1**. Durch die Druckentlastung der inneren Hülle **2** und der Einbauten können die Wände aus Nickelbasislegierung dünn ausgeführt werden. Deshalb ist deutlich weniger Werkstoff notwendig. Die Investition für einen Reaktor **1** verringert sich auf ca. ein Achtel dessen, was ohne Druckentlastung an Materialkosten notwendig wäre. Da der erfindungsgemäße Reaktor **1** durch die dünnere Wand der inneren Hülle **2** in dieser Ausführungsform deutlich leichter ist, reduzieren sich neben den Herstellungskosten auch die Transport- und Instandhaltungskosten.

In bevorzugten Ausführungsformen des erfindungsgemäßen Reaktors **1** hat die druckdicht abschließbare innere Hülle **2** von der druckdicht abschließbare äußeren Hülle **6** einen Abstand von mindestens 100 mm, vorzugsweise mindestens 150 mm, besonders bevorzugt mindestens 200 mm oder mehr. In anderen Ausführungsformen des Reaktors **1** ist der Abstand der druckdicht abschließbare inneren Hülle **2** von der druckdicht abschließbare äußeren Hülle **6** nicht überall gleich. In bevorzugten Ausführungsformen des erfindungsgemäßen Reaktors **1** hat zumindest in dem Bereich in dem in der inneren Hülle **2** der Verweilbereich **5** und gegebenenfalls zumindest teilweise der Aufheizbereich **4** angeordnet sind, die druckdicht abschließbare innere Hülle **2** von der druckdicht abschließbare äußeren Hülle **6** einen Abstand von mindestens 100 mm, vorzugsweise mindestens 150 mm, besonders bevorzugt mindestens 200 mm oder mehr.

In bevorzugten Ausführungsformen des erfindungsgemäßen Reaktors **1** umfasst der zweite Druckraum **16** mindestens eine Schicht eines wärmedämmenden Materials, vorzugsweise eine oder mehrere Hochtemperaturisolierschichten. In bevorzugten Ausführungsformen des erfindungsgemäßen Reaktors **1** umfasst der zweite Druckraum **16** zwei Schichten aus wärmedämmendem Material, vorzugsweise zwei Hochtemperaturisolierschichten. Beispielsweise können die erste Schicht aus wärmedämmendem Material und die zweite Schicht aus wärmedämmendem Material unterschiedliche Wärmeleitfähigkeiten aufweisen. Vorzugsweise weisen die erste Schicht aus wärmedämmendem Material und die zweite Schicht aus wärmedämmendem Material unterschiedliche Wärmeübergangskoeffizienten auf. Vorzugsweise weisen die erste Schicht aus wärmedämmendem Material und die zweite Schicht aus wärmedämmendem Material unterschiedliche Wärmeleitfähigkeiten und unterschiedliche Wärmeübergangskoeffizienten auf. Vorzugsweise sind die erste wärmedämmende Schicht und die zweite wärmedämmende Schicht verbunden. Die wärmedämmenden Schichten umfassen oder bestehen aus wärmedämmendem Material, vorzugsweise Hochtemperaturisolierschichten. In dem erfindungsgemäßen Reaktor **1** können die wärmedämmenden Materialien für die wärmedämmenden Schichten unabhängig voneinander ausgewählt werden aus Hochtemperaturwolle, Mineralwolle, Keramikflies, Mineraldämmung. Dem Fachmann sind weitere geeignete wärmedämmende Materialien bekannt.

Die eine oder mehrere wärmedämmenden Schichten können die innere Hülle **2** ganz oder teilweise umgeben. In einer Ausführungsform des Reaktors **1** umgibt die bzw. umgeben die wärmedämmenden Schichten die innere Hülle **2** vollständig mit Ausnahme des Teils der inneren Hülle **2**, dass dem Boden zugewandt ist. In einer Ausführungsform umgibt die bzw. umgeben die wärmedämmenden Schichten die innere Hülle **2** vollständig mit Ausnahme der Bodenplatte **7**. In weiteren bevorzugten Ausführungsformen des Reaktor **1** ist zumindest der Bereich, in dem im Inneren der inneren Hülle **2** der Verweilbereich **5** angeordnet ist, von einer oder mehreren wärmedämmenden Schichten umgeben. In weiteren bevorzugten Ausführungsformen des Reaktor **1** ist zumindest der Bereich, in dem im Inneren der inneren Hülle **2** der Verweilbereich **5** und der Aufheizbereich **4** angeordnet sind, von einer oder mehreren wärmedämmenden Schichten umgeben.

In bevorzugten Ausführungsformen des erfindungsgemäßen Reaktors **1** hat die innere Hülle **2** von der äußeren Hülle **6** einen Abstand von mindestens 100 mm, vorzugsweise mindestens 150 mm, besonders bevorzugt mindestens 200 mm oder mehr und umfasst in diesem Bereich eine oder zwei Schichten eines wärmedämmenden Materials. In anderen bevorzugten Ausführungsformen des erfindungsgemäßen Reaktors **1** hat zumindest in dem Bereich in dem im inneren Hülle **2** der Aufheizbereich **4** angeordnet ist, die innere Hülle **2** von der äußeren Hülle **6** einen Abstand von mindestens 100 mm, vorzugsweise mindestens 150 mm, besonders bevorzugt mindestens 200 mm oder mehr und umfasst in diesem Bereich eine oder zwei Schichten eines wärmedämmenden Materials. In dem erfindungsgemäßen Reaktor **1** kann die Dicke der ersten Schicht aus wärmedämmendem Material mindestens 25 mm, vorzugsweise mindestens 40 mm, besonders bevorzugt mindestens 50 mm oder mehr betragen. In dem erfindungsgemäßen Reaktor **1** kann die Dicke der zweiten Schicht aus wärmedämmendem Material mindestens 80 mm, vorzugsweise mindestens 100 mm, besonders bevorzugt mindestens 150 mm oder mehr betragen.

In bevorzugten Ausführungsformen des erfindungsgemäßen Reaktors **1** hat die innere Hülle **2** von der äußeren Hülle **6** einen Abstand von 200 mm und umfasst in diesem Bereich eine Schicht eines wärmedämmenden Materials mit einer Dicke von 50 mm und eine zweite Schicht eines wärmedämmenden Materials mit einer Dicke von 150 mm. In bevorzugten Ausführungsformen des erfindungsgemäßen Reaktors **1** hat die innere Hülle **2** von der äußeren Hülle **6** einen Abstand von 100 mm und umfasst in diesem Bereich eine Schicht eines wärmedämmenden Materials mit einer Dicke von 50 mm und eine zweite Schicht eines wärmedämmenden Materials mit einer Dicke von 50 mm.

In anderen bevorzugten Ausführungsformen des erfindungsgemäßen Reaktors **1** hat zumindest in dem Bereich in dem in der inneren Hülle **2** der Verweilbereich **5** und gegebenenfalls zumindest teilweise der Aufheizbereich **4** angeordnet ist, die innere Hülle **2** von der äußeren Hülle **6** einen Abstand von mindestens 200 mm und umfasst in diesem Bereich eine Schicht eines wärmedämmenden Materials mit einer Dicke von 50 mm und eine zweite Schicht eines wärmedämmenden Materials mit einer Dicke von 150 mm. In anderen bevorzugten Ausführungsformen des erfindungsgemäßen Reaktors **1** hat zumindest in dem Bereich in dem in der inneren Hülle **2** der Verweilbereich **5** und gegebenenfalls zumindest teilweise der Aufheizbereich **4** angeordnet ist, die innere Hülle **2** von der äußeren Hülle **6** einen Abstand von mindestens 100 mm und umfasst in diesem Bereich eine Schicht eines wärmedämmenden Materials mit einer Dicke von 50 mm oder mehr und eine zweite Schicht eines wärmedämmenden Materials mit einer Dicke von 50 mm oder mehr.

In besonders bevorzugten Ausführungsformen des Reaktors **1** umfasst der zweite Druckraum **16** ein Inertgas und zwei Schichten aus wärmedämmendem Material. Obwohl während der überkritischen hydrothermalen Vergasung die Temperatur im Verweilbereich **5** in der inneren Hülle **2** 600 bis 700 Grad Celsius beträgt, beträgt die Temperatur an druckdicht abschließbaren äußeren Hülle **6** nur maximal 350 Grad Celsius oder weniger, vorzugsweise 300 Grad Celsius oder 280 Grad Celsius oder weniger, vorzugsweise 200 Grad Celsius oder weniger. Je nach Ausführungsform des Reaktors **1**, d.h. verwendetem Inertgas oder verwendeter komprimierbarer Flüssigkeit, Dicke und Material der ersten wärmedämmenden Schicht und - sofern vorhanden - Dicke und Material der zweiten wärmedämmenden Schicht beträgt die Temperatur an der Innenseite er druckdicht abschließbaren äußeren Hülle **6** zwischen 100 und 250 Grad Celsius, beispielsweise 220 Grad Celsius, 200 Grad Celsius, 150 Grad Celsius oder weniger. Diese Temperaturangaben für die Innenseite der äußeren Hülle **6** beziehen sich auf den Bereich, in dem im Inneren der inneren Hülle **2** der Verweilbereich **5** angeordnet ist.

In besonderen Ausführungsformen umfasst der erfindungsgemäße Reaktor **1** eine Leitung **14** für die Zugabe von Fällungsmittel zur Zugabe von Fällungsmittel wie Mg²⁺, Ca²⁺ und K⁺ zu dem komprimierten wässrigen Vielkomponentengemisch im Abscheidebereich **3**. Beispielsweise vor Abtrennung der Wertstofffraktion WF1 im erfindungsgemäßen Reaktor **1** können, bei 400 bis 550 Grad Celsius ein oder mehrere Fällungsmittel wie Mg²⁺, Ca²⁺ und K⁺ zu dem komprimierten wässrigen Vielkomponentengemisch zugesetzt werden, um eine möglichst vollständige Abtrennung von Phosphat und Ammonium im Abscheidebereich **3** zu erreichen. In bevorzugten Ausführungsformen umfasst der erfindungsgemäße Reaktor **1** zu diesem Zweck eine Leitung **14** für die Zugabe von Fällungsmittel, die mit dem Wärmetauscher WT1 **9** und/oder dem Abscheider A1 verbunden ist. In bevorzugten Ausführungsformen umfasst der erfindungsgemäße Reaktor **1** eine Leitung **14** für die Zugabe des Fällungsmittels, die in den Abscheider A1 mündet.

Druckdicht abschließbar bedeutet, dass in der inneren Hülle **2** der eingestellte Druck von 25 bis 35 MPa aufrechterhalten wird, wenn die innere Hülle **2** druckdicht abgeschlossen ist. Die innere Hülle **2** kann den Abscheidebereich **3**, den Aufheizbereich **4** und den Verweilbereich **5** vollständig umschließen. Die innere Hülle **2** umfasst vorzugsweise eine oder mehrere Verbindungen nach Außen, beispielsweise Öffnungen oder Leitungen. Alle Verbindungen nach Außen sind im erfindungsgemäßen Reaktor **1** so mit der inneren Hülle **2** verbunden, dass die Verbindung druckdicht abgeschlossen werden kann. In besonders bevorzugten Ausführungsformen umfasst die innere Hülle **2** eine Öffnung, die mit einer Bodenplatte **7** druckdicht abschließbar ist. Druckdicht abschließbar bedeutet, dass in der äußeren Hülle **6** der eingestellte Druck von 25 bis 35 MPa aufrechterhalten wird, wenn die äußere Hülle **6** druckdicht abgeschlossen ist. Die äußere Hülle **6** kann die innere Hülle **2** vollständig umschließen. Die äußere Hülle **6** umfasst vorzugsweise eine oder mehrere Verbindungen nach Außen, beispielsweise Öffnungen oder Leitungen. Alle Verbindungen nach Außen sind im erfindungsgemäßen Reaktor **1** so mit der äußere Hülle **6** verbunden, dass die Verbindung druckdicht abgeschlossen werden kann. In besonders bevorzugten Ausführungsformen umfasst die äußere Hülle **6** eine Öffnung, die mit einer Bodenplatte **7** druckdicht abschließbar ist.

In bevorzugten Ausführungsformen umfasst der Reaktor **1** eine Bodenplatte **7**, die mit der druckdicht abschließbaren inneren Hülle **2** druckdicht verbunden ist. In bevorzugten Ausführungsformen umfasst der Reaktor **1** eine Bodenplatte **7**, die mit der druckdicht abschließbaren inneren Hülle **2** und der druckdicht abschließbaren äußeren Hülle **6** druckdicht verbunden ist. In bevorzugten Ausführungsformen sind auf der Bodenplatte **7** der oder die Wärmetauscher, der oder die Abscheider angeordnet. An die Bodenplatte **7** grenzt der Abscheidebereich **3**. In bevorzugten Ausführungsformen sind auf der Bodenplatte **7** Abscheidebereich **3**, Aufheizbereich **4** und Verweilbereich **5** in einer aufrechtstehenden Kolonne im Inneren der druckdicht mit der Bodenplatte **7** verbundenen inneren Hülle **2** angeordnet. Vorzugsweise ist in dieser Ausführungsform des Reaktors **1** der Abscheidebereich **3** oberhalb der Bodenplatte **7** angeordnet, mit dem Verweilbereich **5** im obersten Teil der inneren Hülle **2** und dem Aufheizbereich **4** in der Mitte zwischen Abscheidebereich **3** und Verweilbereich **4**. In bevorzugten Ausführungsformen umfasst der erfindungsgemäße Reaktor **1** eine Bodenplatte **7** aus Stahl. In bevorzugten Ausführungsformen umfasst der erfindungsgemäße Reaktor **1** eine Bodenplatte **7** mit einer Dicke von 20 cm oder weniger, beispielsweise 15 cm oder 10 cm.

In bevorzugten Ausführungsformen umfasst der erfindungsgemäße Reaktor **1** eine druckdicht abschließbare innere Hülle **2**,
in der inneren Hülle **2** einen Abscheidebereich **3** umfassend Wärmetauscher WT1 **9** und Abscheider A1 zur Erwärmung von komprimiertem wässrigen Vielkomponentengemisch auf bis zu 550 Grad Celsius und zur Abtrennung einer Wertstofffraktion WF1 aus dem komprimierten wässrigen Vielkomponentengemisch,
in der inneren Hülle **2** einen Aufheizbereich **4** mit einem oder mehreren Heizelementen zur Erwärmung des komprimierten wässrigen Vielkomponentengemisches nach Abtrennung der Wertstofffraktion WF1 auf 600 bis 700 Grad Celsius,
in der inneren Hülle **2** einen Verweilbereich **5** zur überkritischen hydrothermalen Vergasung des komprimierten wässrigen Vielkomponentengemisches nach dem Aufheizen auf 600 bis 700 Grad Celsius,
wobei Abscheidebereich **3**, Aufheizbereich **4** und Verweilbereich **5** als aufrechtstehende Kolonne auf der Bodenplatte **7** angeordnet sind,
wobei die Bodenplatte **7** über Flanschverbindungen druckdicht abgeschlossen mit der inneren Hülle **2** verbunden ist, mit dem Abscheidebereich **3** oberhalb der Bodenplatte **7**, dem Aufheizbereich **4** oberhalb des Abscheidebereichs **3** und dem Verweilbereich **5** oberhalb des Aufheizbereichs **4** angeordnet.

In bevorzugten Ausführungsformen umfasst der Reaktor **1** eine Bodenplatte **7** mit einer oder mehreren Öffnungen für die Durchführung von Leitungen **14**, beispielsweise eine oder mehrere Öffnungen für eine oder mehrere Eduktleitungen zur Einleitung von komprimiertem wässrigem Vielkomponentengemisch in die innere Hülle **2**, wobei die Eduktleitung(en) mit der Bodenplatte **7** druckdicht abschließbar verbunden ist bzw. sind. In bevorzugten Ausführungsformen umfasst der erfindungsgemäße Reaktor **1** eine Bodenplatte **7** mit mindestens einer Öffnung zur Abtrennung von Wertstoffen, eine Öffnung für eine Leitung **14** ggf. mit Ventil zur Abtrennung von Wertstofffraktion WT1, gegebenenfalls eine Öffnung für eine Leitung **14** ggf. mit Ventil zur Abtrennung von Wertstofffraktion WT2, gegebenenfalls eine Öffnung für eine Leitung **14** ggf. mit Ventil zur Abtrennung von Wertstofffraktion WT2, wobei jede Leitung **14** zur Abtrennung von Wertstoffen mit der Bodenplatte **7** druckdicht abschließbar verbunden ist. In bevorzugten Ausführungsformen umfasst der erfindungsgemäße Reaktor **1** eine Bodenplatte **7** mit mindestens einer Öffnung für die Synthesegasleitung **11** zur Abtrennung von Wasser und Synthesegas, die mit der Bodenplatte **7** druckdicht abschließbar verbunden ist. In bevorzugten Ausführungsformen umfasst der erfindungsgemäße Reaktor **1** eine Bodenplatte **7** mit einer oder mehreren Öffnungen für eine oder mehrere Gasleitungen, die mit dem zweiten Druckraum **16** verbunden sind, zur Einstellung des Gasdrucks im zweiten Druckraum **16**, wobei jede Gasleitung mit der Bodenplatte **7** druckdicht abschließbar verbunden ist. In bevorzugten Ausführungsformen umfasst der erfindungsgemäße Reaktor **1** eine Bodenplatte **7** mit mindestens einer Öffnung für eine Leitung **14** für die Zugabe von Fällungsmittel, wobei die Leitung **14** für die Zugabe von Fällungsmittel mit der Bodenplatte **7** druckdicht abschließbar verbunden ist.

In bevorzugten Ausführungsformen des Reaktors **1** ist die Bodenplatte **7** mit der druckdicht abschließbaren inneren Hülle **2** über Flanschverbindungen verbunden. In bevorzugten Ausführungsformen des Reaktors **1** ist die Bodenplatte **7** mit der druckdicht abschließbaren äußeren Hülle **6** über Flanschverbindungen verbunden. Entsprechende Flanschverbindungen ermöglichen eine druckdichte Verbindung zwischen innerer Hülle **2** und Bodenplatte **7** und soweit vorhanden, zwischen äußerer Hülle **2** und Bodenplatte **7**. Die Flanschverbindungen ermöglichen auch, die innere Hülle **2** und soweit vorhanden die äußere Hülle **6** abzunehmen, um Einbauten auszutauschen, zu reparieren oder die innere Hülle **2** oder die Einbauten zu reinigen. Geeignete Flanschverbindungen sind dem Fachmann bekannt und beispielsweise in EP1010931B1 offenbart.

In bevorzugten Ausführungsformen des Reaktors **1** ist die äußere Hülle **6** aus Stahl, vorzugsweise hochfestem Stahl, Edelstahl. In besonderen Ausführungsformen ist die äußere Hülle **6** aus Stahl beschichtet, beispielsweise umfasst die äußere Hülle **6** eine Glasfaserschicht, beispielsweise umfasst die äußere Hülle **6** außen eine Glasfaserschicht. Beispielsweise hat die äußere Hülle **6** eine Wandstärke von 150 mm oder weniger, beispielsweise 90 mm oder 50 mm. In bevorzugten Ausführungsformen des Reaktors **1** ist die äußere Hülle **6** aus Stahl und hat eine Wandstärke von 80 mm oder weniger.

In bevorzugten Ausführungsformen des Reaktors **1** hat die äußere Hülle **6** einen Durchmesser von 5 m oder weniger, vorzugsweise 3 m oder 1 m, besonders bevorzugt 2 m bis 1,5 m, 1,9 m bis 1,6 m, 1,7 m oder 1,8 m. In bevorzugten Ausführungsformen hat die äußere Hülle **6** die Form eines Zylinders.

In bevorzugten Ausführungsformen umfasst der Reaktor **1** ein Stahlgerüst **8**, das die äußere Hülle **6** umgibt und stabilisiert. In bevorzugten Ausführungsformen wird der erfindungsgemäße Reaktor **1** durch ein Stahlgerüst **8** stabilisiert. Das Stahlgerüst **8** umgibt vorzugsweise die äußeren Hülle **6**. In bevorzugten Ausführungsformen reicht das Stahlgerüst **8** bis auf die Bodenplatte **7**. Vorzugsweise reicht das Stahlgerüst **8** bis auf den Boden. Beispielsweise ist das Stahlgerüst **8** mit einem Fundament im Boden verbunden.

Um den Druck im zweiten Druckraum **16** einstellbar zu machen, ist die äußere Hülle **6** druckdicht abschließbar. Um den Druck im ersten Druckraum **15** während Erwärmung Abscheidung, weiteren Erwärmung und überkritischen hydrothermalen Vergasung aufrecht zu erhalten, ist die erste Hülle **2** druckdicht abschließbar. Bei bestimmungsgemäßem Gebrauch des Reaktors **1** sind die äußere Hülle **6** und die innere Hülle **2** druckdicht abgeschlossen. Bei bestimmungsgemäßem Gebrauch des Reaktors **1** wird im Inneren des zweiten Druckraums **16** der Druck eingestellt und das Inertgas oder die komprimierbare Flüssigkeit im Inneren des zweiten Druckraums **16** komprimiert. Der Druck im Inneren der inneren Hülle **2** wird über das komprimierte Inertgas oder die komprimierte Flüssigkeit von der inneren Hülle **2** an die äußere Hülle **6** des Reaktors **1** weitergegeben. Der Druck des komprimierten Inertgases oder der komprimierten Flüssigkeit im zweiten Druckraum **16** wirkt auf die äußere Wand der inneren Hülle **2**, während auf die innere Wand der inneren Hülle **2** der Druck des komprimierten wässrigen Vielkomponentengemisches wirkt. Der Druck wirkt somit aus beiden Richtungen auf die Fläche der inneren Hülle **2** und verhindert, dass die innere Hülle **2** durch eine größere Druckdifferenz beschädigt wird oder sich verformt und gewährleitet die mechanische Stabilität der inneren Hülle **2**. Im Falle eines komprimierten Inertgases wird dadurch eine pneumatische Verpressung der inneren Hülle **2** erzielt, im Falle einer komprimierten Flüssigkeit eine hydraulische Verpressung der inneren Hülle **2**. Beim Hochfahren (Inbetriebnahme) des Reaktors **1** wird die innere Hülle **2** mit auf 25 bis 35 MPa komprimiertem wässrigen Vielkomponentengemisch befüllt und die Temperatur in den Heizelementen erhöht, im Abscheidebereich auf bis zu 550 Grad Celsius und im Aufheizbereich auf 600 bis 700 Grad Celsius. Dabei erhöht sich der Druck im Inneren der inneren Hülle **2**. Beim Hochfahren des Reaktors **1** wird der Druck im Inneren der äußeren Hülle **6** entsprechend dem Druck in der inneren Hülle **2** ebenfalls erhöht. Während des bestimmungsgemäßen Betriebs wird der Druck im zweiten Druckraum **6** an den Druck im Inneren der inneren Hülle **2** angepasst.

Der Reaktor **1** wird vorzugsweise als Durchflussreaktor **1** betrieben. Bei bestimmungsgemäßem Betrieb des erfindungsgemäßen Reaktors **1** wird über eine erste Gasleitung, die mit der äußeren Hülle **6** über die Bodenplatte **7** druckdicht verbunden ist, Inertgas in den zweiten Druckraum **16** eingeleitet. Bei bestimmungsgemäßem Betrieb des erfindungsgemäßen Reaktors **1** wird über eine zweite Gasleitung die mit der äußeren Hülle **6** über die Bodenplatte **7** druckdicht verbunden ist, Inertgas aus dem zweiten Druckraum **16** abgeleitet. Bei bestimmungsgemäßem Betrieb des erfindungsgemäßen Reaktors **1** wird über die Eduktleitung, die mit der inneren Hülle **2** über die Bodenplatte **7** druckdicht verbunden ist, komprimiertes wässriges Vielkomponentengemisch in die innere Hülle **2** des Reaktors **1** eingeleitet. Bei bestimmungsgemäßem Betrieb des erfindungsgemäßen Reaktors **1** wird wird über die Synthesegasleitung **11**, die mit der inneren Hülle **2** über die Bodenplatte **7** druckdicht verbunden ist, in Wasser gelöstes Synthesegas aus der inneren Hülle **2** des Reaktors **1** abgeleitet. Der Druck im zweiten Druckraum **16** wird nach bekannten Verfahren mit Hochdruckgastank, Niederdruckgastank und gegebenenfalls Mitteldruckgastank eingestellt. Entsprechende Verfahren sind dem Fachmann bekannt.

Gegenstand der Erfindung sind auch Verfahren zur Herstellung eines erfindungsgemäßen Reaktors 1.

Gegenstand der Erfindung ist eine Anlage zum Betreiben des erfindungsgemäßen Reaktors **1** umfassend einen erfindungsgemäßen Reaktor **1** und eine oder mehrere Pumpen. Eine bevorzugte Ausführungsform der Anlage zum Betreiben des erfindungsgemäßen Reaktors **1** umfasst eine Hochdruckpumpe zur Kompression von wässrigem Vielkomponentengemisch auf 25 bis 35 MPa. Beispielsweise ist die Hochdruckpumpe unter der Bodenplatte **7** oder seitlich von der Bodenplatte **7** angeordnet.

Eine Ausführungsform der Anlage zum Betreiben des erfindungsgemäßen Reaktors **1** umfasst einen erfindungsgemäßen Reaktor **1**, eine Hochdruckpumpe zur Kompression von wässrigem Vielkomponentengemisch auf 25 bis 35 MPa und eine Zerkleinerungsvorrichtung. Eine Ausführungsform der Anlage zum Betreiben des erfindungsgemäßen Reaktors **1** umfasst einen erfindungsgemäßen Reaktor, eine Hochdruckpumpe zur Kompression von wässrigem Vielkomponentengemisch auf 25 bis 35 MPa, eine Zerkleinerungsvorrichtung zur Zerkleinerung von Vielkomponentengemisch, das als Edukt eingesetzt wird und eine Vorrichtung zum Verdünnen von Vielkomponentengemisch, das als Edukt eingesetzt wird. Die Anlage zum Betreiben des erfindungsgemäßen Reaktors **1** umfasst vorzugsweise eine Kreislaufwasserleitung zum Verdünnen von Vielkomponentengemisch, das als Edukt eingesetzt wird mit (Prozess-)Wasser, das beispielsweise durch Expansion aus dem Synthesegas-Wasser-Gemisch, dem Vergasungsprodukt der überkritischen hydrothermalen Vergasung, erhalten wird.

Eine bevorzugte Ausführungsform der Anlage zum Betreiben des erfindungsgemäßen Reaktors **1** umfasst vorzugsweise Vorrichtungen zur Messung und Regulierung des Gasdrucks im zweiten Druckraum **16.** In einer Ausführungsform umfasst die erfindungsgemäße Anlage zum Betreiben des erfindungsgemäßen Reaktors **1** einen Niederdruckspeicher für das Inertgas und einen Hochdruckspeicher für das Inertgas. Der Niederdruckspeicher und der Hochdruckspeicher sind mit dem zweiten Druckraum **16** des erfindungsgemäßen Reaktors **1** verbunden, beispielsweise über Gasleitungen. Der Gasdruck im zweiten Druckraum **16** kann über den Niederdruckspeicher und den Hochdruckspeicher reguliert werden. In einer Ausführungsform umfasst die erfindungsgemäße Anlage zum Betreiben des erfindungsgemäßen Reaktors **1** einen Niederdruckspeicher für das Inertgas, einen Hochdruckspeicher für das Inertgas und einen Mitteldruckspeicher für das Inertgas. In einer Ausführungsform umfasst die erfindungsgemäße Anlage zum Betreiben des erfindungsgemäßen Reaktors **1** vorzugsweise ein oder mehrere Gasleitungen und Ventile zur Einstellung des Drucks des Inertgases im zweiten Druckraum **16**, vorzugsweise mindestens ein Druckmessgerät, und gegebenenfalls ein Temperaturmessgerät.

Eine bevorzugte Ausführungsform der Anlage zum Betreiben des erfindungsgemäßen Reaktors **1** umfasst eine Pumpe zum Pumpen des Fällungsmittels durch die Leitung **14** für das Fällungsmittel und in den Abscheidebereich **3** in der inneren Hülle **2.** Beispielsweise ist die Pumpe zum Pumpen des Fällungsmittels unter der Bodenplatte **7** oder seitlich von der Bodenplatte **7** angeordnet.

Eine bevorzugte Ausführungsform der Anlage zum Betreiben des erfindungsgemäßen Reaktors **1** umfasst einen Container, der mit dem erfindungsgemäßen Reaktor **1** verbunden ist. Eine bevorzugte Ausführungsform der Anlage zum Betreiben des erfindungsgemäßen Reaktors **1** umfasst einen Container umfassend die elektronische Infrastruktur zur Steuerung des Reaktors **1**, umfassend gegebenenfalls die Steuerung und die Anschlüsse für die Gasversorgung, umfassend gegebenen falls die Steuerung und die Anschlüsse für die Stromversorgung, umfassend gegebenen falls die Steuerung und die Anschlüsse für eine Kühlung zur Abtrennung von Wasser aus Synthesegas-Wasser-Gemisch und gegebenenfalls weitere Komponenten. Auf diese Weise können schlüsselfertige Anlagen hergestellt, geliefert und schnell in Betrieb genommen werden.

Anlagen, die einen erfindungsgemäßen Reaktor **1** umfassen sind beispielsweise Entsorgungs- Wasseraufbereitungs- oder Energieversorgungsanlagen. Eine besondere Ausführungsform der Anlage umfasst

Einen erfindungsgemäßen Reaktor **1**,
einen Container umfassend die elektronische Infrastruktur zur Steuerung des Reaktors **1**, vorzugsweise Anschlüsse für die Gasversorgung, vorzugsweise Anschlüsse für die Stromversorgung, vorzugsweise Anschlüsse für die Kühlung, vorzugsweise Anschlüsse für die Eduktleitung, vorzugsweise Anschlüsse für die Produktleitung, vorzugsweise Anschlüsse für die Wertstoffleitungen,
gegebenenfalls eine Zerkleinerungsanlage zur Zerkleinerung von Vielkomponentengemisch, das als Edukt eingesetzt wird,
gegebenenfalls eine Verdünnungsanlage zur Verdünnung von Vielkomponentengemisch, das als Edukt eingesetzt wird,
gegebenenfalls einen Vorlagenbehälter für das wässrige Vielkomponentengemisch, Pumpen beispielsweise eine Hochdruckpumpe zur Kompression des wässrigen Vielstoffgemisches, gegebenenfalls eine Pumpe für das Fällungsmittel, gegebenenfalls eine Pumpe für das Kreislaufwasser,
gegebenenfalls eine Aufbereitungsanlage zur Kühlung und Trennung von Vergasungsprodukt in Wasser und Synthesegas,
gegebenenfalls eine Wasseraufbereitungsanlage,
gegebenenfalls eine Gasaufbereitungsanlage,
gegebenenfalls Gasspeicher wie Wasserstoffspeicher, Methanspeicher, Synthesegasspeicher, Niederdruckspeicher, Mitteldruckspeicher, Hochdruckspeicher.

Die erfindungsgemäßen Anlagen können vielfältig eingesetzt werden. Der Reaktor 1 kann auch in bestehende Anlagen integriert werden. Defekte Anlagen oder einzelne defekte Module der Anlage können einfach ausgetauscht werden.

Gegenstand der Erfindung sind auch Verfahren zur Zusammenstellung einer Anlage umfassend einen erfindungsgemäßen Reaktor.

Gegenstand der Erfindung sind auch Verfahren zur überkritischen hydrothermalen Vergasung, die in den vielen Ausführungsformen des erfindungsgemäßen Reaktors 1 durchgeführt werden.

Gegenstand der Erfindung sind Verfahren zur überkritischen hydrothermalen Vergasung von wässrigen Vielkomponentengemischen umfassend
das Einleiten von komprimiertem wässrigem Vielkomponentengemisch in den erfindungsgemäßen Reaktor **1**,
die Erwärmung von Heizelementen, vorzugsweise Wärmetauscher WT1 **9** im Abscheidebereich **3** des erfindungsgemäßen Reaktors **1** auf bis zu 550 Grad Celsius,
die Abtrennung von Wertstoffen aus dem komprimierten wässrigen Vielkomponentengemisch, vorzugsweise in ein bis drei Wertstofffraktionen mittels einer oder mehrerer Abscheider,
die Erwärmung von Heizelementen im Abscheidebereich **3** und im zweiten Druckraum **16** auf 600 bis 750 Grad Celsius, vorzugsweise 610 bis 720 Grad Celsius, vorzugsweise maximal 710 Grad Celsius,
die Regulierung des Synthesegasstroms im Wärmetauscher WT1 **9** durch das Bypass-Ventil,
die Einleitung von Inertgas aus dem Hochdruckgasspeicher in die erste Gasleitung, die über die Bodenplatte **7** druckdicht mit der äußeren Hülle **6** verbunden ist,
gegebenenfalls die Ableitung von Inertgas aus dem zweiten Druckraum **16** in die zweite Gasleitung, die über die Bodenplatte **7** druckdicht mit dem Niederdruckgasspeicher der äußeren Hülle **6** verbunden ist.

Die erfindungsgemäße Reaktor **1** zeichnet sich dadurch aus, dass wertvolle Stoffe (Wertstoffe) aus dem wässrigen Vielkomponentengemisch abgetrennt werden, bevor die überkritische hydrothermale Vergasung durchgeführt wird. Dadurch werden einerseits Wertstoffe zurückgewonnen und können einer weiteren Verwertung zugeführt werden (Recycling). Gleichzeitig wird dadurch die Verstopfung des Reaktors **1** durch ausfallende Salze und Feststoffe minimiert und die Lebensdauer des Reaktors **1** und anderer Bauteile verlängert. Auch wird die Korrosion des Reaktors **1** deutlich vermindert.

Das wässrige Vielkomponentengemisch, das als Edukt eingesetzt wird, umfasst in der Regel mehrere chemische Verbindungen, oft sehr viele unterschiedliche chemische Verbindungen. Das wässrige Vielkomponentengemisch umfasst in vielen Fällen ein Gemisch von festen und flüssigen Stoffen. Als wässriges Vielkomponentengemisch werden vorzugsweise Mischungen eingesetzt, die organische Verbindungen und anorganische Bestandteile umfassen. In vielen Fällen ist die genaue Zusammensetzung des wässrigen Vielkomponentengemisches nicht bekannt und / oder variiert von Charge zu Charge. Das wässrige Vielkomponentengemisch kann anorganische Bestandteile enthalten wie beispielsweise Metalle und Schwermetalle beziehungsweise Metallionen, Metallsalze, Metalloxide, Schwermetallionen, Schwermetallsalze, Schwermetalloxide, Phosphor, Phosphoroxid, Phosphat, Stickstoff, Stickoxide und Ammonium. In vielen Fällen machen anorganische und feste Stoffe insgesamt weniger als 10 bis 5 Vol. %, meistens ungefähr 2 Vol. % des wässrigen Vielkomponentengemisches aus.

Mit dem erfindungsgemäßen Reaktor **1** können die anorganischen und festen Wertstoffe aus wässrigen Vielkomponentengemischen, die organische und anorganische Bestandteile umfassen, abgetrennt werden und die Wertstoffe für eine neue Verwertung zur Verfügung gestellt werden. Ein entsprechendes Verfahren, wobei die Wertstoffe in drei Fraktionen aus wässrigen Vielkomponentengemischen abgetrennt werden ist aus EP 3 434 382 B1 bekannt.

Wässrige Vielkomponentengemische, die in dem Reaktor **1** als Edukt eingesetzt werden können sind beispielsweise organischen Vielkomponentengemischen wie Schlamm, Klärschlamm, Biomüll, Abfällen aus Biogasanlagen, wässrigen organischen Abfällen, industriellen Abfällen, kommunalen Abfällen, tierischen Abfällen, landwirtschaftlichen Abfällen, Gartenabfällen, Tiermehl, pflanzlichen Abfällen, Trester, Flugasche, Klärschlammflugasche, Abfällen der Lebensmittelindustrie, Bohrschlämmen, Gärreste, Gülle, Abwasser wie industriellem Abwasser, Plastik, Papier und Pappe. Das wässrige Vielkomponentengemisch, dass in dem erfindungsgemäßen Reaktor **1** als Edukt eingesetzt wird, muss pumpfähig sein. Feststoffe oder wässrige Vielkomponentengemische mit einem zu hohen Feststoffgehalt werden entsprechend vorbehandelt, vorzugsweise zerkleinert und verdünnt.

Wertstoffe im Sinne der Erfindung sind alle organischen und anorganischen Bestandteile, die in dem jeweiligen Vielkomponentengemisch enthalten sind, beispielsweise Phosphor beispielsweise in Form von Phosphat, Stickstoff beispielsweise in Form von Ammonium, Metalle beispielsweise in Form von Metallionensalzen, Schwermetalle beispielsweise in Form von Schwermetallionensalzen, Silizium beispielsweise in Form von Sand, Calcium beispielsweise in Form von Sand.

Das Vergasungsprodukt der überkritischen hydrothermalen Vergasung umfasst Synthesegas, das in überkritischem Wasser gelöst ist. Vorzugsweise besteht das Vergasungsprodukt im Wesentlichen aus überkritischem Wasser, in dem Synthesegas gelöst ist. Das Synthesegas umfasst im Wesentlichen Wasserstoff, Methan und Kohlendioxid. Die Zusammensetzung des Synthesegase kann in Abhängigkeit vom eingesetzten Edukt, der Ausführungsform des erfindungsgemäßen Reaktors **1** und den genauen Reaktionsbedingungen variieren.

Gegenstand der Erfindung sind auch Anwendungen des erfindungsgemäßen Reaktors 1 und der erfindungsgemäßen Anlagen. Beispielsweise Anwendung des erfindungsgemäßen Reaktors **1** und der erfindungsgemäßen Anlagen zur Erzeugung von Synthesegas, Wasserstoff, Methan aus wässrigem Vielkomponentengemisch. Beispielsweise Anwendung des erfindungsgemäßen Reaktors **1** und der erfindungsgemäßen Anlagen zur Abtrennung von Phosphat und Ammonium aus wässrigen Vielkomponentengemischen. Beispielsweise Anwendung des erfindungsgemäßen Reaktors **1** und der erfindungsgemäßen Anlagen zur Erzeugung von Dünger aus wässrigem Vielkomponentengemisch. Beispielsweise Anwendung des erfindungsgemäßen Reaktors **1** und der erfindungsgemäßen Anlagen zur Abtrennung von Metallsalzen aus wässrigen Vielkomponentengemischen. Beispielsweise Anwendung des erfindungsgemäßen Reaktors **1** und der erfindungsgemäßen Anlagen zur Abtrennung von festen Stoffen aus wässrigen Vielkomponentengemischen. Beispielsweise Anwendung des erfindungsgemäßen Reaktors **1** und der erfindungsgemäßen Anlagen von Sand aus wässrigen Vielkomponentengemischen. Beispielsweise Anwendung des erfindungsgemäßen Reaktors **1** und der erfindungsgemäßen Anlagen zur Abtrennung von Metallen aus dem wässrigen Vielkomponentengemischen. Beispielsweise Anwendung des erfindungsgemäßen Reaktors **1** und der erfindungsgemäßen Anlagen zur Entsorgung von wässrigen Vielkomponentengemischen. Beispielsweise Anwendung des erfindungsgemäßen Reaktors **1** und der erfindungsgemäßen Anlagen zur Aufbereitung oder Reinigung von Wasser umfasst. Beispielsweise Anwendung des erfindungsgemäßen Reaktors **1** und der erfindungsgemäßen Anlagen zur Energieversorgung. Beispielsweise Anwendung des erfindungsgemäßen Reaktors **1** und der erfindungsgemäßen Anlagen zur Energiespeicherung. Beispielsweise Anwendung des erfindungsgemäßen Reaktors **1** und der erfindungsgemäßen Anlagen in Entsorgungs-, Wasseraufbereitungs- und Energieversorgungsanlagen.

| | Bezugszeichen |
|---|---|
| Reaktor | **1** |
| Innere Hülle | **2** |
| Abscheidebereich | **3** |
| Aufheizbereich | **4** |
| Verweilbereich | **5** |
| Äußere Hülle | **6** |
| Bodenplatte | **7** |
| Stahlgerüst | **8** |
| Wärmetauscher WT1 | **9** |
| Wärmetauscher WT4 | **10** |
| Synthesegasleitung | **11** |
| Wärmetauscher WT2 | **12** |
| Wärmetauscher WT3 | **13** |
| Leitung (en) | **14** |
| Erster Druckraum | **15** |
| Zweiter Druckraum | **16** |
| Dritter Druckraum | **17** |
| Trichterförmiger Übergang vom Aufheizbereich in den Verweilbereich | **18** |
| Flanschverbindung | **19** |

**Fig. 1** zeigt einen erfindungsgemäßen Reaktor **1** im Längsschnitt mit innerer Hülle **2**, Abscheidebereich **3**, Aufheizbereich **4** und Verweilbereich **5**, wobei Abscheidebereich **3**, Aufheizbereich **4** und Verweilbereich **5** als aufrechtstehende Kolonne angeordnet sind.

**Fig. 2** zeigt einen erfindungsgemäßen Reaktor **1** im Längsschnitt mit innerer Hülle **2**, Abscheidebereich **3**, Aufheizbereich **4** und Verweilbereich **5**, wobei Abscheidebereich **3**, Aufheizbereich **4** und Verweilbereich **5** als aufrechtstehende Kolonne angeordnet sind, äußerer Hülle **6**, Bodenplatte **7**, Stahlgerüst **8**, Wärmetauscher WT1 **9**, Wärmetauscher **WT410,** Wärmetauscher WT2 und WT3 **12,13,** Leitungen **14,** trichterförmigem Übergang vom Ringspalt im Aufheizbereich **4** zum Ringspalt im Verweilbereich **5 18,** Flanschverbindung **19.**

**Fig. 3** zeigt einen erfindungsgemäßen Reaktor **1** im Längsschnitt mit innerer Hülle **2,** äußerer Hülle **6,** Bodenplatte **7,** Synthesegasleitung **11,** erstem Druckraum **15,** zweitem Druckraum **16,** drittem Druckraum **17.**

**Fig. 4** zeigt einen vergrößerten Ausschnitt des erfindungsgemäßen Reaktors **1** aus Fig. 3 mit innerer Hülle **2,** äußerer Hülle **6,** Synthesegasleitung **11,** erstem Druckraum **15,** zweitem Druckraum **16,** drittem Druckraum **17.**

## Patentansprüche

1. Reaktor **(1)** zur überkritischen hydrothermalen Vergasung von auf 25 bis 35 MPa komprimiertem wässrigem Vielkomponentengemisch unter Sauerstoffausschluss umfassend eine druckdicht abschließbare innere Hülle **(2),**
in der inneren Hülle **(2)** einen Abscheidebereich **(3)** zur Erwärmung von komprimiertem wässrigen Vielkomponentengemisch auf bis zu 550 Grad Celsius und Abtrennung von Wertstoffen aus komprimiertem wässrigen Vielkomponentengemisch umfassend einen Wärmetauscher WT1 **(9)** und einen Abscheider A1,
in der inneren Hülle **(2)** einen Aufheizbereich **(4)** zur Erwärmung von komprimiertem wässrigem Vielkomponentengemisch nach der Abtrennung von Wertstoffen auf 600 bis 700 Grad Celsius,
in der inneren Hülle **(2)** einen Verweilbereich **(5)** zur überkritischen hydrothermalen Vergasung von komprimiertem wässrigen Vielkomponentengemisch nach dem Aufheizen auf 600 bis 700 Grad Celsius.

2. Reaktor **(1)** nach Anspruch 1, wobei Abscheidebereich **(3),** Aufheizbereich **(4)** und Verweilbereich **(5)** als aufrechtstehende Kolonne angeordnet sind.

3. Reaktor **(1)** nach einem der vorgehenden Ansprüche umfassend im Abscheidebereich **(3)** einen Wärmetauscher WT3 **(13)** zur Erwärmung von komprimiertem wässrigem Vielkomponentengemisch auf 200 bis 300 Grad Celsius und einen Abscheider A3 zur Abtrennung einer Wertstofffraktion WF3, einen Wärmetauscher WT2 **(12)** zur Erwärmung von komprimiertem wässrigem Vielkomponentengemisch auf 300 bis 400 Grad Celsius und einen Abscheider A2 zur Abtrennung einer Wertstofffraktion WF2 und einen Wärmetauscher WT1 **(9)** zur Erwärmung von komprimiertem wässrigem Vielkomponentengemisch auf 400 bis 550 Grad Celsius und einen Abscheider A1 zur Abtrennung einer Wertstofffraktion WF1.

4. Reaktor **(1)** nach einem der vorgehenden Ansprüche umfassend im Aufheizbereichen **(4)** Wärmetauscher WT4 **(10)**, Bypass und Bypass-Ventil wobei Wärmetauscher WT4 **(10)** und Bypass mit dem Wärmetauscher WT1 **(9)** verbunden sind.

5. Reaktor **(1)** nach einem der vorgehenden Ansprüche umfassend im Aufheizbereichen **(4)** und im Verweilbereich **(5)** eine Synthesegasleitung **(11)**, wobei die Synthesegasleitung **(11)** in einem Teil des Aufheizbereichs **(4)** oder im ganzen Aufheizbereich **(4)** mit der inneren Hülle **(2)** einen Ringspalt bildet und der Ringspalt im Aufheizbereich **(4)** zumindest teilweise einen Durchmesser von weniger als 20 mm hat,
wobei die Synthesegasleitung **(11)** in einem Teil des Verweilbereichs **(5)** oder im ganzen Verweilbereich **(5)** mit der inneren Hülle **(2)** einen Ringspalt bildet und der Ringspalt im Verweilbereich **(5)** zumindest teilweise einen Durchmesser von mindestens 150 mm hat,
wobei die Synthesegasleitung **(11)** im Verweilbereich **(5)** zur Einleitung von überkritischem Wasser, in dem Synthesegas gelöst ist, mindestens eine Öffnung aufweist,
wobei die Synthesegasleitung **(11)** im Aufheizbereich **(4),** sofern der Aufheizbereich **(4)** Wärmetauscher WT4 **(10)** und Bypass umfasst, mit dem Wärmetauscher WT4 **(10)** und dem Bypass verbunden ist.

6. Reaktor **(1)** nach einem der vorgehenden Ansprüche umfassend eine druckdicht abschließbare äußere Hülle **(6),** wobei die druckdicht abschließbare äußere Hülle **(6)** die druckdicht abschließbare innere Hülle **(2)** umgibt und umfassend einen zweiten Druckraum **(16)** zwischen der inneren Hülle **(2)** und der äußeren Hülle **(6).**

7. Reaktor **(1)** nach einem der vorgehenden Ansprüche umfassend im zweiten Druckraum **(16)** ein komprimierbares Inertgas oder eine komprimierbare Flüssigkeit, mindestens eine Schicht aus einem wärmeisolierenden Material und ein oder mehrere Heizelemente.

8. Reaktor **(1)** nach einem der Ansprüche 6 oder 7, wobei die innere Hülle **(2)** und die Einbauten in der inneren Hülle **(2)** aus Nickelbasislegierung bestehen, eine Wandstärke von weniger als 10 mm haben und gegebenenfalls ein oder mehrere Beschichtungen umfassen.

9. Reaktor **(1)** nach einem der vorgehenden Ansprüche, wobei die Wärmetauscher und Abscheider im Abscheidebereich **(3)** Wärmetauscher mit integriertem Abscheider sind.

10. Reaktor **(1)** nach einem der vorgehenden Ansprüche, wobei die Wärmetauscher oder die Wärmetauscher mit integriertem Abscheider Pillow-Plate Wärmetauscher sind.

11. Reaktor **(1)** nach einem der vorgehenden Ansprüche umfassend eine Bodenplatte **(7),** die druckdicht abschließbar mir der inneren Hülle **(2)** und sofern vorhanden druckdicht abschließbar mit der äußeren Hülle **(6)** verbunden ist und umfassend ein Stahlgerüst **(8)**, das die innere Hülle **(2)** oder sofern vorhanden die äußere Hülle **(6)** umgibt und stabilisiert.

12. Anlage, vorzugsweise Entsorgungs- Wasseraufbereitungs- oder Energieversorgungsanlage umfassend einen Reaktor **(1)** nach einem der Ansprüche 1 bis 11, eine Hochdruckpumpe, eine Zerkleinerungsvorrichtung, eine Vorrichtung zum Verdünnen, mindestens zwei Gasspeicher und einen Container.

13. Verwendung eines Reaktors **(1)** nach einem der Ansprüche 1 bis 11 zur Erzeugung von Synthesegas und / oder Wasserstoff und / oder Methan aus wässrigem Vielkomponentengemisch, zur Abtrennung von Phosphat und / oder Ammonium aus wässrigem Vielkomponentengemischen, zur Erzeugung von Dünger aus wässrigem Vielkomponentengemisch, zur Abtrennung von Metallsalzen aus wässrigem Vielkomponentengemisch, zur Abtrennung von festen Stoffen wie Sand, Metall aus wässrigem Vielkomponentengemisch, zur Entsorgung von wässrigem Vielkomponentengemisch, zur Aufbereitung oder Reinigung von Wasser, zur Energieversorgung, zur Energiespeicherung.
